# EUROPÄISCHE PATENTSCHRIFT

(11) **EP 1 330 498 B1**
(45) Veröffentlichungstag und Bekanntmachung des Hinweises auf die Patenterteilung: **24.05.2006**
(21) Anmeldenummer: 01983526.3
(22) Anmeldetag: 05.10.2001
(51) Int. Cl.: C09D 5/08, C23C 22/34

(54) **VERFAHREN ZUR BESCHICHTUNG VON METALLISCHEN OBERFLÄCHEN MIT EINER WÄSSERIGEN ZUSAMMENSETZUNG, DIE WÄSSERIGE ZUSAMMENSETZUNG UND VERWENDUNG DER BESCHICHTETEN SUBSTRATE**
METHOD FOR COATING METALLIC SURFACES WITH AN AQUEOUS COMPOSITION, THE AQUEOUS COMPOSITION AND USE OF THE COATED SUBSTRATES
PROCEDE POUR ENDUIRE DES SURFACES METALLIQUES AVEC UNE COMPOSITION AQUEUSE, COMPOSITION AQUEUSE ET UTILISATION DES SUBSTRATS AINSI REVETUS

(30) Priorität: 11.10.2000 DE 10050532
(43) Veröffentlichungstag der Anmeldung: 30.07.2003
(73) Patentinhaber: Chemetall GmbH, 60487 Frankfurt (DE)
(72) Erfinder: BITTNER, Klaus, 60385 Frankfurt am Main (DE); DOMES, Heribert, 35789 Weilmünster (DE); WIETZORECK, Hardy, 65934 Frankfurt am Main (DE); JUNG, Christian, 96173 Oberhaid (DE); SHIMAKURA, Toshiaki, 272-0815 Ichiwawa-shi, Chiba-Ken (JP)
(74) Vertreter: Uppena, Franz
(86) Internationale Anmeldenummer: PCT/EP2001/011506
(87) Internationale Veröffentlichungsnummer: WO 2002/031222

(56) Entgegenhaltungen:
- EP-A- 0 952 193
- WO-A-00/26437
- US-A- 5 089 064

## Beschreibung

Die Erfindung betrifft ein Verfahren zur Beschichtung von metallischen Oberflächen mit einer Polymer, Kationen von Titan, Zirkonium, Hafnium, Silicium, Aluminium oder/und Bor sowie feine anorganische Partikel enthaltenden Zusammensetzung. Ferner betrifft die Erfindung eine entsprechende wässerige Zusammensetzung sowie die Verwendung der nach dem erfindungsgemäßen Verfahren beschichteten Substrate.

Die bislang am häufigsten eingesetzten Verfahren zur Oberflächenbehandlung von Metallen, insbesondere von Metallband, basieren auf dem Einsatz von Chrom(VI)-Verbindungen zusammen mit diversen Zusatzstoffen. Aufgrund der toxikologischen und ökologischen Risiken, die derartige Verfahren mit sich bringen und darüber hinaus aufgrund der absehbaren gesetzlichen Einschränkungen bezüglich der Anwendung von Chromat-haltigen Verfahren wird schon seit längerer Zeit nach Alternativen zu diesen Verfahren auf allen Gebieten der Metalloberflächenbehandlung gesucht.

EP-A-0 713 540 beschreibt eine saure, wässerige Zusammensetzung zur Behandlung von Metalloberflächen, die komplexes Fluorid auf Basis von Ti, Zr, Hf, Si, Al oder/und B, Kationen des Co, Mg, Mn, Zn, Ni, Sn, Cu, Zr, Fe oder/und Sr, anorganische Phosphate bzw. Phosphonate sowie Polymere in einem Verhältnis von Polymeren zu komplexen Fluoriden im Bereich von 1 : 2 bis 3 : 1 enthält. Diese Publikation beschreibt jedoch bei jedem Beispiel einen Zusatz an Phosphat oder Phosphonat.

EP-A-0 181 377 bzw. WO 85/05131 führt wässerige Zusammensetzungen auf Basis a) von Komplexfluorid von B, Si, Ti oder Zr, von Flußsäure oder/und von Fluorid, b) von Salzen des Co, Cu, Fe, Mn, Ni, Sr oder/und Zn, c) eines Sequestrierungsmittels ausgewählt aus Nitrilotriessigsäure NTA, Ethylendiamintetraessigsäure EDTA, Gluconsäure, Zitronensäure bzw. deren Derivaten oder Alkali- oder Ammoniumsalzen und d) eines Polymers aus Polyacrylsäure, Polymethacrylsäure oder deren C1- bis C8- Alkanolestern an. Diese Publikation lehrt jedoch nicht den Einsatz feinverteilter Partikel.

WO-A-93/20260 betrifft ein Verfahren zur Herstellung einer Beschichtung für eine Aluminium-reiche metallische Oberfläche mit einer wässerigen Mischung ohne Trennung von Phasen, die komplexes Fluorid auf der Basis von Ti, Zr, Hf, Si, Ge, Sn oder/und B sowie eine gelöste oder/und dispergierte Verbindung auf Basis von Ti, Zr, Hf, Al, Si, Ge, Sn oder/und B enthält.. Das..hierbei zugegebene spezifische Polymer basiert auf 4-Hydroxostyrol und Phenolharz und ist gelblich und wirkt u.U. toxisch. Es dient als Filmbildner und Haftungsvermittler. Die Beispiele führen wässerige Zusammensetzungen mit einem Gehalt an Hexafluorotilansäure, SiO2-Partikeln und diesem Polymer in einem Bereich von 5,775 bis 8,008 Gew.-% auf. Darüber hinaus schützt diese Publikation ein Verfahren zur Beschichtung einer metallischen Oberfläche mit dieser wässerigen Mischung erst durch Kontaktieren und Auftrocknen sowie danach kurzzeitigem Kontaktieren mit einer derartigen Mischung bei Temperaturen im Bereich von 25 und 90 °C. Es wird keine Schichtdicke der mit dieser wässerigen Zusammensetzung aufgebrachten Beschichtung angeführt. Diese läßt sich jedoch aus den angegebenen Schichtauflagen an Titan angegeben, die 22 bis 87 mg/m2 betragen und damit grob etwa zehnmal so stark sind wie bei den erfindungsgemäßen Beispielen dieser Anmeldung. Das deckt sich mit der Annahme, daß aufgrund des hohen Anteils an Polymeren in der Suspension und aufgrund der sehr hohen Konzentration der Suspension diese auch eine erhöhte Viskosität aufweist, so daß die Suspension auch eine vergleichsweise dicke Beschichtung ausbildet, die wahrscheinlich im Bereich von etlichen µm Dicke liegen wird. Die für die Biegung T2 nach dem Kochen angegebenen T-Bend-Daten sind mit den T1-Daten dieser Anmeldung nicht konkret vergleichbar, aber in jedem Fall als deutlich schlechter einzuschätzen, da bei T1 um etwa 1 mm herumgebogen wird, bei T2 aber um etwa 2 mm herumgebogen wird, wodurch die Belastungen deutlich geringer sind.

US 5,089,064 lehrt ein Verfahren zur Beschichtung von Aluminium-haltigen Oberflächen mit einer wässerigen Zusammensetzung, die 0,01 bis 18 Gew.-% Hexafluorozirkonsäure, 0,01 bis 10 Gew.-% eines spezifischen Polymers auf Basis von 4-Hydroxystyrol und Phenolharz (siehe auch WO-A-93/20260), 0,05 bis 10 Gew.-% SiO2-Partikel, ggf. ein Lösemittel zum Auflösen von 4-Hydroxystyrol-Phenolharz unterhalb von 50 °C und ggf. ein Tensid enthält, wobei die wässerige Zusammensetzung im Auftrockenverfahren ohne nachträgliches Spülen aufgebracht wird.

WO 96/07772 beschreibt ein Verfahren zur Konversionsbehandlung von metallischen Oberflächen mit einer wässerigen Zusammensetzung enthaltend (A) Komplexfluoride auf Basis von Ti, Zr, Hf, Si, Al oder/und B von wenigstens 0,15 M/kg, (B) Kationen ausgewählt aus Co, Cu, Fe, Mg, Mn, Ni, Sn, Sr, Zn oder/und Zr mit einem molaren Verhältnis von (B) zu (A) im Bereich von 1 : 5 bis 3 : 1, (C) wenigstens 0,15 Mp/kg von Phosphor-haltigen Oxyanionen oder/und Phosphonaten, (D) wenigstens 1 % von wasserlöslichen und wasserdispergierbaren Polymeren bzw. von Polymerbildenden Harzen sowie (E) genügend freie Säure, um der wässerigen Zusammensetzung einen pH-Wert im Bereich von 0,5 bis 5 zu verleihen.

WO 00/26437 A1 beschreibt Zusammensetzungen zur Ausbildung einer sichtbaren Konversionsbeschichtung mittels einer wässerigen, eine Fluorosäure von z.B. Titan oder Zirkonium, eine weitere Komponente auf Basis einer Verbindung von Titan, Zirkonium, Hafnium, Bor, Aluminium, Silicium, Germanium oder Zinn sowie Alizarin-Farbstoff enthaltenden Zusammensetzung.

EP 0 952 193 A1 lehrt Zusammensetzungen auf Basis von einem Aluminiumsalz, Oxidpartikeln, einem Aluminium-freien Salz, einer Phosphorverbindung und einem Harz oder dessen Vorläufermaterial.

Aufgabe der Erfindung ist es, die Nachteile des Standes der Technik zu überwinden und insbesondere ein Verfahren zur Beschichtung von metallischen Oberflächen vorzuschlagen, das auch für hohe Beschichtungsgeschwindigkeiten, wie sie für Bänder genutzt werden, geeignet ist, das weitgehend oder gänzlich frei von Chrom(VI)-Verbindungen ist und das großtechnisch einsetzbar ist.

Die Aufgabe wird gelöst durch ein Verfahren zur Beschichtung einer metallischen Oberfläche, insbesondere von Aluminium, Eisen, Kupfer, Magnesium, Nickel, Titan, Zinn, Zink oder Aluminium, Eisen, Kupfer, Magnesium, Nickel, Titan, Zinn oder/und Zink enthaltenden Legierungen, mit einer weitgehend oder gänzlich von Chrom(VI)-Verbindungen freien wässerigen Zusammensetzung zur Vorbehandlung vor einer weiteren Beschichtung oder zur Behandlung, bei der der zu beschichtende Körper ggf. - insbesondere ein Band oder Bandabschnitt - nach der Beschichtung umgeformt wird, das dadurch gekennzeichnet ist, daß die Zusammensetzung neben Wasser
a) mindestens einen organischen Filmbildner, der mindestens ein wasserlösliches oder wasserdispergiertes Polymer enthält, das ein Kunstharz ist auf Basis von Polyacrylsäure, Polyacrylat oder/und Polyethylen-Acrylsäure oder ein Kunstharzgemisch oder/und ein Mischpolymerisat ist mit einem Gehalt an Kunstharz auf Basis Acrylat bzw. Polyacryl, wobei der Gesamtgehalt an organischem Filmbildner im Bereich von 0,2 bis 30 g/L liegt,
b) einen Gehalt an Kationen oder/und Hexafluorokomplexen von Kationen ausgewählt aus der Gruppe von Titan, Zirkonium, Hafnium, Silicium und Bor im Bereich von 0,1 bis 50 g/L,
c) mindestens eine anorganische Verbindung in Partikelform mit einem mittleren Partikeldurchmesser gemessen an einem Rasterelektronenmikroskop im Bereich von 0,005 bis zu 0,2 µm Durchmesser, wobei der Gesamtgehalt an diesen anorganischen Verbindungen im Bereich von 0,2 bis 25 g/L liegt,
d) ggf. mindestens ein Silan oder/und Siloxan berechnet als Silan und
e) ggf. mindestens einen Korrosionsinhibitor enthält,
wobei das Verhältnis des Gehalts an Kationen oder/und Hexafluorokomplexen von Kationen b) zum Gehalt an anorganischen Verbindungen in Partikelform c) in der wässerigen Zusammensetzung ≤ 5,5 : 1 beträgt,
wobei die saubere metallische Oberfläche mit der wässerigen Zusammensetzung in Kontakt gebracht und ein Partikel enthaltender Film auf der metallischen Oberfläche ausgebildet wird, der anschließend getrocknet wird und ggf. zusätzlich ausgehärtet wird und
wobei der getrocknete und ggf. auch ausgehärtete Film eine Schichtdicke im Bereich von 0,01 bis 0,5 µm aufweist - näherungsweise ermittelt über die Bestandteile, die Dichte der Bestandteile und die mit der Röntgenfluoreszenzanalyse bestimmten Auflagemengen an Titan bzw. Zirkonium auf der beschichteten Oberfläche.

Hierbei ergibt ein Standard-Coil-Coating-Lack F2-647 zusammen mit dem Top Coat-Lack F5-618 aufgebracht auf den getrockneten oder ausgehärteten Film vorzugsweise eine Haftfestigkeit von maximal 10 % der enthafteten Fläche bei einem T-Bend-Test mit einer Biegung T1 nach NCCA.

Beides sind Lacke der Fa. Akzo Nobel. Die Primer-Beschichtung wird für diese Prüfungen standardisiert mit einer Schichtdicke von ziemlich genau 5 µm auf die erfindungsgemäße Beschichtung aufgetragen, und der Top Coat-Lack wird mit einer Schichtdicke von ziemlich genau 20 µm standardisiert auf dieser Primer-Beschichtung aufgebracht. Danach wird ein beschichteter Bandabschnitt soweit umgebogen, daß an der Biegestelle der Abstand der beiden Blechhälften zueinander genau eine Blechstärke beträgt. Die Blechstärke des verwendeten Materials betrug 0,8 mm. An der Biegestelle wird dann die Lackhaftung mittels Klebebandabriß geprüft und als Ergebnis der Prüfung der prozentuale Anteil der enthafteten Fläche angegeben. Der T-Bend-Test kann daher als sehr anspruchsvoller Lackhaftungstest für die Qualität vorbehandelter und lackierter metallischer Bleche bezüglich der Beschädigung dieses Schichtsystems beim nachträglichen Umformen angesehen werden. Vorzugsweise liegen die Flächenanteile der enthafteten Fläche bei dem T-Bend-Test bei bis zu 8 %, besonders bevorzugt bei bis zu 5 %, ganz besonders bevorzugt bei bis zu 2 %, wobei jedoch die besten Werte bei näherungsweise 0 % liegen, so daß dann üblicherweise nur noch Risse aber keine Flächenenthaftungen auftreten können.

Der organische Filmbildner ist in der wässerigen Zusammensetzung (= Badlösung) vorzugsweise in einem Gehalt von 0,1 bis 100 g/L enthalten, besonders bevorzugt in einem Bereich von 0,2 bis 30 g/L, ganz besonders bevorzugt von 0,5 bis 10 g/L, insbesondere von 1 bis 4 g/L.

Der Gehalt an Kationen oder/und Hexafluorokomplexen von Kationen ausgewählt aus der Gruppe von Titan, Zirkonium, Hafnium, Silicium und Bor beträgt in der wässerigen Zusammensetzung (Badlösung) vorzugsweise 0,1 bis 50 g/L, besonders bevorzugt 0,2 bis 30 g/L, ganz besonders bevorzugt 0,5 bis 10 g/L, insbesondere 1 bis 4 g/L. Diese Angaben sind auf den Gehalt des elementaren Metalls bezogen.

Die anorganische Verbindung in Partikelform ist in der wässerigen Zusammensetzung (Badlösung) vorzugsweise in einem Gehalt von 0,1 bis 80 g/L enthalten, besonders bevorzugt in einem Bereich von 0,2 bis 25 g/L, ganz besonders bevorzugt von 0,5 bis 10 g/L, insbesondere von 1 bis 4 g/L.

Das Verhältnis der Gehalte an Kationen oder/und Hexafluorokomplexen von Kationen ausgewählt aus der Gruppe von Titan, Zirkonium, Hafnium, Silicium, Aluminium und Bor zu Gehalten an organischem Filmbildner in der wässerigen Zusammensetzung (Badlösung) kann in weiten Bereichen schwanken; insbesondere kann es bei ≤ 1 : 1 liegen. Vorzugsweise liegt dieses Verhältnis in einem Bereich von 0,05 : 1 bis 3,5 : 1, besonders bevorzugt in einem Bereich von 0,2 : 1 bis 2,5 : 1.

Das Verhältnis der Gehalte an Kationen oder/und Hexafluorokomplexen von Kationen ausgewählt aus der Gruppe von Titan, Zirkonium, Hafnium, Silicium und Bor zu Gehalten an anorganischen Verbindungen in Partikelform in der wässerigen Zusammensetzung (Badlösung) kann in weiten Bereichen schwanken; insbesondere kann es bei ≤ 5,5 : 1 liegen. Vorzugsweise liegt dieses Verhältnis in einem Bereich von 0,05 : 1 bis 5 : 1, besonders bevorzugt in einem Bereich von 0,2 : 1 bis 2,5 : 1.

Das Verhältnis der Gehalte an organischem Filmbildner zu Gehalten an anorganischen Verbindungen in Partikelform in der wässerigen Zusammensetzung (Badlösung) kann in weiten Bereichen schwanken; insbesondere kann es bei ≤ 3,8 : 1 liegen. Vorzugsweise liegt dieses Verhältnis in einem Bereich von 0,05 : 1 bis 3,5 : 1, besonders bevorzugt in einem Bereich von 0,18 : 1 bis 2,5 : 1.

Der Gehalt an mindestens einem Silan oder/und Siloxan berechnet als Silan beträgt in der wässerigen Zusammensetzung (Badlösung) vorzugsweise 0,1 bis 50 g/L, besonders bevorzugt 0,2 bis 35 g/L, ganz besonders bevorzugt 0,5 bis 20 g/L, insbesondere 1 bis 10 g/L. Ein derartiger Zusatz kann helfen, die Haftung einer nachfolgend aufgetragenen organischen Beschichtung durch reaktive funktionelle Gruppen wie Amino- oder Epoxyfunktionen zu verbessern.

Vorzugsweise ist die wässerige Zusammensetzung auch frei oder weitgehend frei von Übergangsmetallen oder Schwermetallen, die nicht in der anorganischen Verbindung in Partikelform in sehr geringen Partikelgrößen vorliegen oder/und die nicht an Fluor z.B. als Hexa- oder/und Tetrafluorid gebunden sind und dann aber auch nicht nur an Fluor gebunden sein müssen. Außerdem kann die wässerige Zusammensetzung auch frei oder weitgehend frei von Übergangsmetallen oder Schwermetallen sein, die bewußt der wässerigen Zusammensetzung zugesetzt worden sind mit Ausnahme der oben genannten Zusätze in Partikelform bzw. mit Ausnahme der zumindest teilweise an Fluorid gebundenen Verbindungen. Dagegen kann die wässerige Zusammensetzung Spuren oder kleine Gehalte an Verunreinigungen an Übergangsmetallen oder Schwermetallen aufweisen, die aufgrund eines Beizeffektes aus der metallischen Substratoberfläche oder/und den Badbehältern bzw. Rohrleitungen herausgelöst wurden, die von vorhergehenden Bädern eingeschleppt wurden oder/und die aus Verunreinigungen der Rohstoffe stammen. Besonders bevorzugt ist die wässerige Zusammensetzung frei oder weitgehend frei an Blei, Cadmium, Eisen, Kobalt, Kupfer, Mangan, Nickel, Zink oder/und Zinn. Vor allem empfiehlt sich der Einsatz weitgehend oder gänzlich chromfreier wässeriger Zusammensetzungen. Die wässerige Zusammensetzung, die weitgehend frei von Chrom(VI)-Verbindungen ist, weist auf Chrom-freien metallischen Oberflächen nur einen Chrom-Gehalt von bis zu 0,05 Gew.-%, auf Chrom-haltigen metallischen Oberflächen einen Chrom-Gehalt von bis zu 0,2 Gew.-% auf. Vorzugsweise ist die wässerige Zusammensetzung auch frei von Phosphor enthaltenden Verbindungen, falls diese nicht an Polymere gebunden sind oder an diese weitgehend gebunden werden sollen. Es ist bevorzugt, weder Chrom bzw. Phosphat oder Phosphonat, noch Gehalte an Blei, Cadmium, Eisen, Kobalt, Kupfer, Mangan, Nickel, Zink oder/und Zinn absichtlich zuzugeben, so daß entsprechende Gehalte nur aufgrund von Spurenverunreinigungen, Einschleppung aus davor liegenden Bädern bzw. Rohrleitungen bzw. aufgrund des Anlösens von Verbindungen der zu beschichtenden Oberfläche auftreten können. Vorzugsweise ist die Zusammensetzung auch frei von Zusätzen oder Gehalten an Hydroxocarbonsäuren wie z.B. Gluconsäure.

Der Begriff "saubere metallische Oberfläche" bedeutet hierbei eine ungereinigte metallische, z.B. frisch verzinkte Oberfläche, bei der keine Reinigung notwendig ist, oder eine frisch gereinigte metallische Oberfläche.

Bei dem erfindungsgemäßen Verfahren kann der organische Filmbildner in der Form einer Lösung, Dispersion, Emulsion, Mikroemulsion oder/und Suspension vorliegen. Der organische Filmbildner kann mindestens ein Kunstharz sein bzw. enthalten, insbesondere ein Kunstharz auf Basis Acrylat, Polyacryl, Ethylen, Polyethylen, Polyester, Polyurethan, Siliconpolyester, Epoxid, Phenol, Polystyrol, Styrol, Harnstoff-Formaldehyd, deren Mischungen oder/und deren Mischpolymerisaten. Hierbei kann es sich um ein kationisch, anionisch oder/und sterisch stabilisiertes Kunstharz bzw. Polymer oder/und deren. Lösung handeln.

Vorzugsweise ist der organische Filmbildner ein Kunstharzgemisch oder/und ein Mischpolymerisat, das einen Gehalt an Kunstharz auf Basis Acrylat, Polyacryl, Ethylen, Polyethylen, Harnstoff-Formaldehyd, Polyester, Polyurethan, Polystyrol oder/und Styrol enthält, aus dem während bzw. nach der Abgabe von Wasser und anderen flüchtigen Bestandteilen ein organischer Film ausbildet wird. Der organische Filmbildner kann Kunstharz oder/und Polymer auf der Basis von Polyacrylat, Polyethylenimin, Polyurethan, Polyvinylalkohol, Polyvinylphenol, Polyvinylpyrrolidon, Polyasparaginsäure oder/und deren Derivate bzw. Copolymere, insbesondere Copolymere mit einer Phosphor enthaltenden Vinylverbindung, Ethylen-Acryl-Mischpolymerisat, Acrylmodifizierter Polyester, Acryl-Polyester-Polyurethan-Mischpolymerisat bzw. Styrolacrylat enthalten. Das Kunstharz bzw. Polymer ist vorzugsweise wasserlöslich. Es enthält vorzugsweise freie Säuregruppen, die nicht neutralisiert sind, um einen Angriff auf die metallische Oberfläche zu ermöglichen.

Ganz besonders bevorzugt ist ein Kunstharz auf Basis Polyacrylsäure, Polyacrylat oder/und Polyethylen-Acrylsäure, insbesondere letzteres als Copolymer, oder ein Kunstharz mit einem Schmelzpunkt im Bereich von 40 bis 160 °C, insbesondere im Bereich von 120 bis 150 °C.

Die Säurezahl des Kunstharzes kann vorzugsweise im Bereich von 5 bis 800 liegen, besonders bevorzugt im Bereich von 50 bis 700. Der Vorteil derartiger Kunstharze liegt bei den meisten Fällen darin, daß es nicht erforderlich ist, diese Kunstharze bzw. Polymere kationisch, anionisch oder sterisch zu stabilisieren. Das Molekulargewicht des Kunstharzes bzw. des Polymers kann im Bereich von mindestens 1.000 u, vorzugsweise von 5.000 bis 250.000 u, besonders bevorzugt im Bereich von 20.000 bis 200.000 u liegen.

Vorzugsweise ist der Phosphorgehalt der wässerigen Zusammensetzung weitgehend oder gänzlich an organische, insbesondere polymere Verbindungen gebunden, so daß der Phosphorgehalt fast nicht oder nicht an rein anorganische Verbindungen wie z.B. Orthophosphate gebunden ist.

Einerseits kann die wässerige Zusammensetzung so beschaffen sein, daß sie keine Korrosionsinhibitoren enthält, wobei die daraus gebildeten Beschichtungen bereits einen hervorragenden Korrosionsschutz erwerben. Andererseits kann sie auch einen Gehalt an jeweils mindestens einem Korrosionsinhibitor aufweisen. Der Korrosionsinhibitor kann mindestens eine organische Gruppe oder/und mindestens eine AminoGruppe aufweisen. Er kann eine organische Verbindung bzw. eine AmmoniumVerbindung, insbesondere ein Amin bzw. eine Amino-Verbindung, sein wie z.B. ein Alkanolamin, ein TPA-Amin-Komplex, ein Phosphonat, eine Polyasparaginsäure, ein Thioharnstoff, ein Zr-Ammoniumcarbonat, Benzotriazol, ein Tannin, ein elektrisch leitfähiges Polymer wie z.B. ein Polyanilin oder/und deren Derivate enthalten, wodurch der Korrosionsschutz noch einmal deutlich verbessert werden kann. Es kann vorteilhaft sein, wenn der Korrosionsinhibitor in Wasser gut löslich oder/und in Wasser gut dispergierbar ist, insbesondere mit mehr als 20 g/L. Er ist vorzugsweise in einem Gehalt im Bereich von 0,01 bis 50 g/L, besonders bevorzugt im Bereich von 0,3 bis 20 g/L, ganz besonders bevorzugt im Bereich von 0,5 bis 10 g/L in der wässerigen Zusammensetzung enthalten. Ein Zusatz von mindestens einem Korrosionsinhibitor ist insbesondere für elektrolytisch verzinkte Stahlbleche von Bedeutung. Der Zusatz eines Korrosionsinhibitors kann helfen, die erforderliche Sicherheit für die Korrosionsbeständigkeit in der Serienfertigung zu erzielen.

Darüber hinaus zeigte sich, daß ein Zusatz von Manganionen z.B. zugegeben als Metall in saurer Lösung oder in Form von Mangancarbonat zu den in den Beispielen angeführten Zusammensetzungen die Alkallbeständigkeit verbesserte. Hierbei hat sich insbesondere ein Zusatz von Mn-lonen mit einem Gehalt im Bereich von 0,05 bis 10 g/L sehr bewährt. Überraschenderweise ergab sich durch diesen Manganzusatz eine spürbare Verbesserung nicht nur der Alkalibeständigkeit, sondern auch der allgemeinen Korrosionsbeständigkeit und der Lackhaftung.

Bei dem erfindungsgemäßen Verfahren liegt der pH-Wert der wässerigen Lösung des organischen Filmbildners ohne Zugabe weiterer Verbindungen vorzugsweise im Bereich von 0,5 bis 12, insbesondere kleiner als 7, besonders bevorzugt im Bereich von 1 bis 6 bzw. 6 bis 10,5, ganz besonders bevorzugt im Bereich von 1,5 bis 4 bzw. 7 bis 9, je nachdem, ob im sauren oder eher basischen Bereich gearbeitet wird. Der pH-Wert nur des organischen Filmbildners in einer wässerigen Zubereitung ohne Zugabe weiterer Verbindungen liegt vorzugsweise im Bereich von 1 bis 12.

Weiterhin ist es bevorzugt, daß die wässerige, Fluor enthaltende Zusammensetzung einen hohen oder sehr hohen Anteil an Komplexfluorid, insbesondere 50 bis 100 Gew.-% bezogen auf den Gehalt an Fluor, enthält. Der Gehalt an Fluor in Form von Komplexen und freien lonen in der wässerigen Zusammensetzung (Badlösung) beträgt vorzugsweise insgesamt 0,1 bis 14 g/L, vorzugsweise 0,15 bis 8 g/L, insbesondere 0,2 bis 3 g/L.

Andererseits ist es bevorzugt, daß die wässerige Zusammensetzung einen Gehalt an Zirkonium als alleinigem Kation oder in einem höheren Anteil, d.h. mindestens 30 Gew.-%, bezogen auf das Gemisch an Kationen ausgewählt aus der Gruppe von Titan, Zirkonium, Hafnium, Silicium und Bor enthält. Der Gehalt an derartigen Kationen in der wässerigen Zusammensetzung (Badlösung) beträgt vorzugsweise insgesamt 0,1 bis 15 g/L, vorzugsweise 0,15 bis 8 g/L, insbesondere 0,2 bis 3 g/L. Der Gehalt an Zirkonium oder/und Titan in der wässerigen Zusammensetzung beträgt vorzugsweise insgesamt 0,1 bis 10 g/L, besonders bevorzugt 0,15 bis 6 g/L, insbesondere 0,2 bis 2 g/L. Es wurde festgestellt, daß keines der Kationen ausgewählt aus dieser Gruppe bessere Ergebnisse bezüglich Korrosionsschutz und Lackhaftung erbringt als Zirkonium, das anteilig oder allein ausgewählt aus diesen Kationen enthalten ist.

Wenn ein deutlicher Überschuß an Fluorid in Bezug auf den Gehalt an derartigen Kationen auftritt, insbesondere mehr als 35 mg/L freies Fluorid, dann wird der Beizeffekt der wässerigen Zusammensetzung verstärkt. Insbesondere ein Gehalt an 35 bis 350 mg/L freies Fluorid kann helfen, die Dicke der erzeugten Beschichtung besser zu kontrollieren. Wenn ein deutlicher Unterschuß an Fluorid in Bezug auf den Gehalt an derartigen Kationen auftritt, dann wird der Beizeffekt der wässerigen Zusammensetzung deutlich verringert und eine dickere Beschichtung wird häufig ausgebildet werden, die in manchen Fällen sogar zu dick sein kann und einer Filiform-Korrosion leicht unterliegen kann und noch dazu eine schlechtere Lackhaftung aufweist.

Die entstehende Beschichtung kann eine Konversionsbeschichtung oder eine Beschichtung sein, die keines der in der metallischen Oberfläche enthaltenen Elemente herausgelöst und eingebaut enthält. Die Beschichtung lagert vorzugsweise auf der sehr dünnen, direkt auf der metallischen Oberfläche aufsitzenden Oxid/Hydroxid-Schicht direkt auf oder sogar direkt auf der metallischen Oberfläche. Je nachdem man einen dicken oder dünnen Film aufbringen möchte, wird eine höhere oder geringere Konzentration von Kationen aus oben genannter Gruppe bzw. Fluorid benötigt.

Besonders gute Beschichtungsergebnisse wurden mit einem Flüssigkeitsfilm im Bereich von 0,8 bis 12 ml/m2 erzielt, insbesondere mit einem Flüssigkeitsfilm von etwa 2 ml/m2 im no-rinse-Verfahren (Auftrockenverfahren ohne nachfolgenden Spülschritt) aufgetragen mit einem Produktions-Rollcoater oder mit einem Flüssigkeitsfilm von etwa 7 ml/m2 im no-rinse-Verfahren aufgetragen mit einem Labor-Rollcoater. Bei einem Walzenauftrag wird häufig ein dickerer Flüssigkeitsfilm aufgetragen (üblicherweise im Bereich 2 bis 10 ml/m2) als beim Tauchen und Abquetschen mit glatten Gummiwalzen (üblicherweise im Bereich von 1 bis 6 ml/m2).

Für ein Konzentrat zum Ansetzen der Badlösung in erster Linie durch Verdünnen mit Wasser bzw. für eine Ergänzungslösung zum Einstellen der Badlösung beim längeren Betrieb eines Bades werden vorzugsweise wässerige Zusammensetzungen verwendet, die die meisten oder fast alle Bestandteile der Badlösung enthält, jedoch nicht die mindestens eine anorganische Verbindung in Partikelform, die bevorzugt separat gehalten und separat zugeben wird. Darüber hinaus kann auch der Zusatz von mindestens einem Beschleuniger, wie er beim Phosphatieren üblicherweise eingesetzt wird, auch hier vorteilhaft sein, weil dadurch ein beschleunigter Angriff auf die metallische Oberfläche durch Beschleunigung der oxidativen Auflösung des Metalls bzw. der Legierung möglich ist. Hierbei sind z.B. mindestens ein Peroxid oder/und mindestens eine Verbindung auf Basis von Hydroxylamin, Nitroguanidin bzw. Nitrat geeignet. Das Konzentrat bzw. die Ergänzungslösung weisen vorzugsweise eine Konzentration auf, die fünfmal bis zehnmal bezüglich der einzelnen Bestandteile so stark angereichert ist wie die Badlösung.

Der organische Filmbildner kann auch so zusammengesetzt sein, daß er (nur) wasserlösliches Kunstharz oder/und Polymer enthält, insbesondere solches, das in Lösungen mit pH-Werten ≤ 5 stabil ist.

Der organische Filmbildner enthält vorzugsweise Kunstharz bzw. Polymer, das einen höheren Anteil an Carboxyl-Gruppen aufweist. Andererseits können auch Kunstharze eingesetzt werden, die erst nach Umsetzung mit einer basischen Verbindung wie Ammoniak, Aminen oder/und Alkalimetallverbindungen wasserlöslich oder wasserdispergierbar werden.

Bei dem erfindungsgemäßen Verfahren kann es bevorzugt sein, daß die wässerige Zusammensetzung mindestens ein teilhydrolysiertes oder gänzlich hydrolysiertes Silan enthält. Das bietet dann den Vorteil, daß bei vielen Lacksystemen eine verbesserte Haftung erzielt wird. Das Silan kann ein Acyloxysilan, ein Alkylsilan, ein Alkyltrialkoxysilan, ein Aminosilan, ein Aminoalkylsilan, ein Aminopropyltrialkoxysilan, ein Bis-Silyl-Silan, ein Epoxysilan, ein Fluoroalkylsilan, ein Glycidoxysilan wie z.B. ein Glycidoxyalkyltrialkoxysilan, ein Isocyanato-Silan, ein Mercapto-Silan, ein (Meth)acrylato-Silan, ein Mono-Silyl-Silan, ein Multi-Silyl-Silan, ein Bis-(trialkoxysilylpropyl)amin, ein Bis-(trialkoxysilyl)ethan, ein Schwefel enthaltendes Silan, ein Bis-(trialkoxysilyl)propyltetrasulphan, ein Ureidosilan wie z.B. ein (Ureidopropyltrialkoxy)silan oder/und ein Vinylsilan, insbesondere ein Vinyltrialkoxysilan oder/und ein Vinyltriacetoxysilan, sein. Es kann z.B. mindestens ein Silan im Gemisch mit einem Gehalt an mindestens einem Alkohol wie Äthanol, Methanol oder/und Propanol von bis zu 8 Gew.-% bezogen auf den Silan-Gehalt sein, vorzugsweise bis zu 5 Gew.-%, besonders bevorzugt bis zu 1 Gew.-%, ganz besonders bevorzugt bis zu 0,5 Gew.-%, ggf. mit einem Gehalt an anorganischen Partikeln, insbesondere in einem Gemisch aus mindestens einem Amino-Silan wie z.B. Bis-Amino-Silan mit mindestens einem Alkoxy-Silan wie z.B. Trialkoxy-Silyl-Propyl-Tetrasulfan oder ein Vinylsilan und ein Bis-Silyl-Aminosilan oder ein Bis-Silyl-Polyschwefelsilan und/oder ein Bis-Silyl-Aminosilan oder ein Aminosilan und ein Multi-Silyl-funktionelles Silan. Die wässerige Zusammensetzung kann dann auch alternativ oder ergänzend mindestens ein den o.g. Silanen entsprechendes, Siloxan enthalten. Bevorzugt sind solche Silane/Siloxane, die eine Kettenlänge im Bereich von 2 bis 5 C-Atomen aufweisen und eine funktionelle Gruppe aufweisen, die zur Reaktion mit Polymeren geeignet ist. Ein Zusatz von mindestens einem Silan oder/und Siloxan kann dazu günstig sein, Haftbrücken auszubilden oder die Vernetzung zu fördern.

Bei dem erfindungsgemäßen Verfahren wird als anorganische Verbindung in Partikelform ein feinverteiltes Pulver, eine Dispersion oder eine Suspension zugesetzt, wie z.B. ein Carbonat, ein Oxid, ein Silicat oder ein Sulfat, insbesondere kolloidale oder amorphe Partikel. Als anorganische Verbindung in Partikelform sind Partikel auf Basis von mindestens einer Verbindung des Aluminiums, Bariums, Cers, Kalziums, Lanthans, Siliciums, Titans, Yttriums, Zinks oder/und Zirkoniums besonders bevorzugt, insbesondere Partikel auf Basis von Aluminiumoxid, Bariumsulfat, Cerdioxid, Seltenerdmischoxid, Siliciumdioxid, Silicat, Titanoxid, Yttriumoxid, Zinkoxid oder/und Zirkonoxid. Vorzugsweise liegt die mindestens eine anorganische Verbindung in Partikelform vor in Partikeln mit einer mittleren Partikelgröße im Bereich von 6 nm bis 150 nm, besonders bevorzugt im Bereich von 7 bis 120 nm, ganz besonders bevorzugt im Bereich von 8 bis 90 nm, noch stärker bevorzugt im Bereich von 8 bis 60 nm, vor allem bevorzugt im Bereich von 10 bis 25 nm. Es ist bevorzugt, daß größere Partikel eine eher plättchenförmige oder längliche Kornform aufweisen.

Für den Fall, daß erfindungsgemäß beschichtete und ggf. auch mit Lack oder lackähnlichen Überzügen versehene metallische Substrate geschweißt werden sollten, kann es vorteilhaft sein, als Partikel der Verbindung in Partikelform solche mit höherer oder hoher elektrischer Leitfähigkeit einzusetzen, insbesondere solche von Oxiden, Phosphaten, Phosphiden bzw. Sulfiden von Aluminium, Eisen oder Molybdän, insbesondere Aluminiumphosphid, Eisenoxid, Eisenphosphid, mindestens eine Molybdänverbindung wie Molybdänsulfid, Graphit oder/und Ruß, wobei diese Partikel dann auch eine solche mittlere Partikelgröße aufweisen können, daß sie ggf. aus der erfindungsgemäßen Schicht etwas stärker herausragen.

Bei dem erfindungsgemäßen Verfahren kann auch mindestens ein organisches Lösemittel zugesetzt werden. Als organisches Lösemittel für die organischen Polymere kann mindestens ein wassermischbarer oder/und wasserlöslicher Alkohol, ein Glykolether bzw. N-Methylpyrrolidon oder/und Wasser verwendet werden, im Falle der Verwendung eines Lösemittelgemisches insbesondere eine Mischung aus Wasser mit mindestens einem langkettigen Alkohol, wie z.B. Propylenglykol, ein Esieralkohol, ein Glykolether oder/und Butandiol. Vorzugsweise wird jedoch in vielen Fällen nur Wasser ohne jegliches organisches Lösemittel zugegeben. Der Gehalt an organischem Lösemittel beträgt, wenn überhaupt ein solches zugesetzt wird, vorzugsweise 0,1 bis 10 Gew.-%, insbesondere von 0,2 bis 5 Gew.-%, ganz besonders von 0,4 bis 3 Gew.-%. Für die Bandherstellung ist es bevorzugt, eher nur Wasser und keine organischen Lösemittel einzusetzen, evtl. außer geringen Mengen an Alkohol wie z.B. bis zu 3 Gew.-%.

Bei dem erfindungsgemäßen Verfahren kann als Gleitmittel mindestens ein Wachs ausgewählt aus der Gruppe der Paraffine, Polyethylene und Polypropylene zugesetzt werden, insbesondere ein oxidiertes Wachs bzw. ein HD-Polyethylen. Es ist besonders vorteilhaft, das Wachs als wässerige bzw. als anionisch oder kationisch stabilisierte Dispersion einzusetzen, weil es dann in der wässerigen Zusammensetzung leicht homogen verteilt gehalten werden kann. Der Schmelzpunkt des als Gleitmittel eingesetzten Wachses liegt bevorzugt im Bereich von 40 bis 160 °C, insbesondere im Bereich von 120 bis 150 °C. Besonders vorteilhaft ist es, zusätzlich zu einem Gleitmittel mit einem Schmelzpunkt im Bereich von 120 bis 165 °C ein Gleitmittel mit einem Schmelzpunkt im Bereich von 45 bis 95 °C oder mit einer Glasübergangstemperatur im Bereich von - 20 bis + 60 °C zuzusetzen, insbesondere in Mengen von 2 bis 30 Gew.-%, vorzugsweise von 5 bis 20 Gew.-%, des Gesamtfeststoffgehalts. Letztgenanntes Gleitmittel kann auch allein vorteilhaft eingesetzt werden. Ein Wachsgehalt ist jedoch nur vorteilhaft, wenn die erfindungsgemäße Beschichtung eine Behandlungsschicht ist oder falls sich der Wachsgehalt einer Vorbehandlungsschicht bei der nachfolgenden Lackierung nicht nachteilig auswirken sollte.

Die Säuregruppen des Kunstharzes oder/und des Polymers können mit Ammoniak, mit Aminen wie z.B. Morpholin, Dimethylethanolamin, Diethylethanolamin oder Triethanolamin oder/und mit Alkalimetallverbindungen wie z.B. Natriumhydroxid neutralisiert sein.

Vorzugsweise ist die wässerige Zusammensetzung frei von anorganischen oder organischen Säuren, ggf. mit Ausnahme von Hexafluorosäuren.

Darüber hinaus kann der wässerigen Zusammensetzung eine basische Verbindung zugesetzt werden, um die wässerige Zusammensetzung in einem pH-Wert im Bereich von 0,5 bis 5 zu halten. Insbesondere bevorzugt sind Basen ausgewählt aus Ammoniak und Aminverbindungen wie z.B. Triethanolamin.

Die wässerige Zusammensetzung kann gegebenenfalls jeweils mindestens ein Biozid, einen Entschäumer, einen Haftvermittler, einen Katalysator, einen Korrosionsinhibitor, ein Netzmittel oder/und ein Umformadditiv enthalten. Manche Additive weisen hierbei mehrere Funktionen auf; so sind viele Korrosionsinhibitoren gleichzeitig Haftvermittler und ggf. auch Netzmittel.

Der Wassergehalt der wässerigen Zusammensetzung kann in weiten Bereichen schwanken. Vorzugsweise wird ihr Wassergehalt im Bereich von 95 bis 99,7 Gew.-% liegen, insbesondere im Bereich von 97,5 bis 99,5 Gew.-%, wobei ein kleiner Teil des hier angegebenen Wassergehalts auch durch mindestens ein organisches Lösemittel ersetzt sein kann. Bei Bandanlagen hoher Geschwindigkeit liegt der Gehalt an Wasser oder ggf. an Wasser zusammen mit einem kleinen Gehalt (bis zu 3 Gew.-%) an organischem Lösemittel bevorzugt im Bereich von 97 bis 99 Gew.-%, besonders bevorzugt im Bereich von 97,5 bis 98,5 Gew.-%. Wenn der wässerigen Zusammensetzung Wasser zugesetzt wird, wird vorzugsweise voll entsalztes Wasser oder eine andere etwas reinere Wasserqualität zugegeben.

Bei dem erfindungsgemäßen Verfahren kann die wässerige Zusammensetzung durch Aufwalzen, Fluten, Aufrakeln, Spritzen, Sprühen, Streichen oder/und Tauchen und ggf. durch nachfolgendes Abquetschen z.B. mit einer Rolle aufgetragen werden.

Die wässerige Zusammensetzung kann einen pH-Wert im Bereich von 0,5 bis 12, vorzugsweise im Bereich von 1 bis 6 bzw. 7 bis 9, besonders bevorzugt im Bereich von 1,5 bis 4 bzw. 6 bis 10,5 aufweisen, je nachdem, ob im sauren oder eher basischen Bereich gearbeitet wird.

Die wässerige Zusammensetzung kann insbesondere bei einer Temperatur im Bereich von 5 bis 50 °C auf die metallische Oberfläche aufgebracht werden, vorzugsweise im Bereich von 10 bis 40 °C, besonders bevorzugt im Bereich von 18 bis 25 °C.

Bei dem erfindungsgemäßen Verfahren kann die metallische Oberfläche bei der Applikation der Beschichtung auf Temperaturen im Bereich von 5 bis 120 °C, vorzugsweise im Bereich von 10 bis 60 °C, ganz bevorzugt von 18 bis 25 °C gehalten werden.

Das Endtrocknen kann bei derartigen Filmen viele Tage andauern, während die wesentliche Trocknung bereits in wenigen Sekunden vollzogen werden kann. Hierbei erfolgt das Verfilmen, vor allem beim Trocknen im Temperaturbereich von 25 bis 95 °C, ggf. auch bei noch höherer Temperatur. Das Aushärten kann dabei u.U. über mehrere Wochen dauern bis der Endtrocknungs- oder Aushärtungszustand erreicht ist. Hierbei wird oft kein oder nur ein geringer Anteil der Polymerisation durch thermische Vernetzung erfolgen bzw. der Anteil der Polymerisation entsprechend gering sein. Die derart verfilmte und ausgehärtete erfindungsgemäße Beschichtung kann als Korrosionsschutzschicht angesehen werden, insbesondere als Behandlungs- oder Vorbehandlungsschicht.

Bei Bedarf kann der Aushärtungszustand zusätzlich durch chemische oder/und thermische Beschleunigung der Vernetzung, insbesondere durch Erwärmen, oder/und durch aktinische Bestrahlung z.B. mit UV-Strahlung beschleunigt bzw. verstärkt werden, wobei dann geeignete Kunstharze/Polymere und ggf. Photoinitiatoren zuzusetzen sind. Durch entsprechende Zusätze bzw. Verfahrensvarianten kann eine teilweise, weitgehende oder vollständige Vernetzung der Polymere erzielt werden. Die derart vernetzte erfindungsgemäße Beschichtung kann bei geringeren Anteilen (insbesondere bei 0,05 bis 5 Gew.-% an Polymeren in der wässerigen Zusammensetzung) an Polymeren als Korrosionsschutzschicht angesehen und eingesetzt werden, bei höheren Anteilen (0,5 bis 50 Gew.-% an Polymeren in der wässerigen Zusammensetzung) an Polymeren als Primer-Schicht, insbesondere als Pretreatment-Primer-Schicht.

Weiterhin kann die beschichtete metallische Oberfläche bei einer Temperatur im Bereich von 20 bis 250 °C, vorzugsweise im Bereich von 40 bis 120 °C, ganz besonders bevorzugt bei 60 bis 100 °C PMT (peak-metal-temperature) getrocknet werden. Die notwendige Verweilzeit beim Trocknen ist im wesentlichen umgekehrt proportional zur Trockentemperatur: Z.B. bei bandförmigem Material 1 s bei 100 °C oder 30 min bei 20 °C, während beschichtete Teile u.a. je nach Wanddicke deutlich länger getrocknet werden müssen. Zum Trocknen eignen sich insbesondere Trockeneinrichtungen auf Basis von Umluft, Induktion, Infrarot oder/und Mikrowellen.

Die Schichtdicke der erfindungsgemäßen Beschichtung liegt bevorzugt im Bereich von 0,01 bis 6 µm, besonders bevorzugt im Bereich von 0,02 bis 2,5 µm, ganz besonders bevorzugt im Bereich von 0,03 bis 1,5 µm, insbesondere im Bereich von 0,05 bis 0,5 µm.

Bei der Beschichtung von Bändern können die beschichteten Bänder zu einem Bandspule (Coil) aufgewickelt werden, ggf. nach einer Abkühlung auf eine Temperatur im Bereich von 40 bis 70 °C.

Die erfindungsgemäße Beschichtung muß nicht die einzige Behandlungs-/Vorbehandlungsschicht sein, die auf die metallische Oberfläche aufgebracht wird, sondern sie kann auch eine Behandlungs-/Vorbehandlungsschicht unter zwei, drei oder sogar vier verschiedenen Behandlungs-/Vorbehandlungsschichten sein. Beispielsweise kann sie in einem System von mindestens zwei derartigen Schichten als zweite Schicht z.B. nach einer alkalischen Passivierung wie z.B. auf Basis von Co-Fe-Kationen aufgetragen werden. Sie kann beispielsweise auch in einem System von mindestens drei derartigen Schichten als dritte Schicht z.B. nach einer Aktivierungsbehandlung z.B. auf Basis von Titan und nach einer Vorbehandlungsbeschichtung z.B. mit einem Phosphat wie ZnMnNi-Phosphat aufgebracht werden. Darüber hinaus sind viele weitere Kombinationen mit ähnlichen oder anderen Behandlungs-/Vorbehandlungsschichten in einem solchen Schichtsystem denkbar und gut geeignet. Die Auswahl der Arten und Kombinationen solcher Beschichtungen zusammen mit der erfindungsgemäßen Beschichtung ist vor allem eine Frage der jeweiligen Anwendung, der Anforderungen und der vertretbaren Kosten.

Auf die erfindungsgemäße Beschichtung oder auf die oberste Behandlungs-*N*orbehandlungsschicht in einem solchen Schichtsystem kann dann bei Bedarf mindestens ein Lack oder/und mindestens eine lackähnliche Beschichtung wie z.B. zuerst ein Primer appliziert werden. Auf die Primer-Beschichtung kann bei Bedarf entweder eine Lack- oder eine lackähnliche Zwischenschicht oder die weitere Lackabfolge z.B. aus Füller und mindestens einem Top Coat aufgebracht werden. Eine lackähnliche Beschichtung wird im Rahmen dieser Anmeldung auch als Beschichtung aus "Lack" bezeichnet.

Auf den teilweise oder gänzlich getrockneten bzw. ausgehärteten Film kann jeweils mindestens eine Beschichtung aus Lack, Polymer, Farbe, Klebstoff oder/und Klebstoffträger aufgebracht werden, beispielsweise auch eine Spezialbeschichtung wie z.B. eine Beschichtung mit der Eigenschaft, IR-Strahlung zu reflektieren.

Die erfindungsgemäß mit der wässerigen Zusammensetzung beschichteten Metallteile, insbesondere Bänder oder Bandabschnitte, können umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden. Das Umformen geschieht jedoch üblicherweise erst nach dem Lackieren. Diese Verfahren sind grundsätzlich bekannt.

Die Aufgabe wird ferner gelöst durch eine wässerige Zusammensetzung zur Vorbehandlung einer metallischen Oberfläche vor einer weiteren Beschichtung oder zur Behandlung jener Oberfläche, die dadurch gekennzeichnet ist, daß die Zusammensetzung neben Wasser
a) mindestens einen organischen Filmbildner, der mindestens ein wasserlösliches oder wasserdispergiertes Polymer enthält, das ein Kunstharz ist auf Basis von Polyacrylsäure, Polyacrylat oder/und Polyethylen-Acrylsäure oder ein Kunstharzgemisch oder/und ein Mischpolymerisat ist mit einem Gehalt an Kunstharz auf Basis Acrylat bzw. Polyacryl, wobei der Gesamtgehalt an organischem Filmbildner im Bereich von 0,2 bis 30 g/L liegt,
b) einen Gehalt an Kationen oder/und Hexafluorokomplexen von Kationen ausgewählt aus der Gruppe von Titan, Zirkonium, Hafnium, Silicium und Bor im Bereich von 0,1 bis 50 g/L,
c) mindestens eine anorganische Verbindung in Partikelform mit einem mittleren Partikeldurchmesser gemessen an einem Rasterelektronenmikroskop im Bereich von 0,005 bis zu 0,2 µm Durchmesser, wobei der Gesamtgehalt an diesen anorganischen Verbindungen im Bereich von 0,2 bis 25 g/L liegt,
d) ggf. mindestens ein Silan oder/und Siloxan berechnet als Silan und
e) ggf. mindestens einen Korrosionsinhibitor enthält und
wobei das Verhältnis des Gehalts an Kationen oder/und Hexafluorokomplexen von Kationen b) zum Gehalt an anorganischen Verbindungen in Partikelform c) ≤ 5,5 : 1 beträgt.

Das mit der wässerigen Zusammensetzung erfindungsgemäß beschichtete Teil mit einer metallischen Oberfläche kann ein Draht, eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür- oder Fahrradrahmen oder ein Kleinteil wie z.B. eine Schraube, Mutter, Flansch, Feder oder ein Brillengestell sein.

Das erfindungsgemäße Verfahren stellt eine Alternative zu den genannten Chromat-haltigen Verfahren dar, insbesondere im Bereich der Oberflächenvorbehandlung von Metallband vor der Lackierung, und liefert im Vergleich zu ihnen ähnlich gute Ergebnisse hinsichtlich Korrosionsschutz und Lackhaftung.

Darüberhinaus ist es möglich, das erfindungsgemäße Verfahren zur Behandlung der in herkömmlicher Weise gereinigten Metalloberfläche ohne eine darauf folgende Nachbehandlung wie dem Spülen mit Wasser oder einer geeigneten Nachspüllösung einzusetzen. Das erfindungsgemäße Verfahren ist insbesondere für die Applikation der Behandlungslösung mittels eines sog. Rollcoaters geeignet, wobei die Behandlungsflüssigkeit unmittelbar nach der Applikation ohne weitere nachgeschaltete Verfahrensschritte wie z.B. Spülschritte eingetrocknet werden kann (Dry-in-place-Technologie). Dadurch wird das Verfahren z.B. gegenüber herkömmlichen Spritz- bzw. Tauchverfahren erheblich vereinfacht, und es fallen nur geringste Mengen an Abwasser an, weil durch das Abquetschen mit einer Walze kaum Badflüssigkeit ungenutzt verloren geht, was auch gegenüber den bereits etablierten, im Spritzverfahren mit Nachspüllösungen arbeitenden chromfreien Verfahren einen Vorteil darstellt.

Mit den erfindungsgemäßen Beschichtungen werden Vorbehandlungsschichten erzielt, die zusammen mit dem nachfolgend aufgebrachten Lack ein Beschichtungssystem ergaben, der den besten chromhaltigen Beschichtungssystemen gleichwertig ist.

Üblicherweise sind die erfindungsgemäßen Beschichtungen weit dünner als 0,5 µm. Je dicker die Beschichtungen werden, desto stärker nimmt die Lackhaftung ab, wobei der Korrosionsschutz ggf. jedoch noch etwas verbessert wird.

Die erfindungsgemäßen Beschichtungen sind sehr preiswert, umweltfreundlich und gut großtechnisch einsetzbar.

Es war überraschend, daß mit einer erfindungsgemäßen Kunstharzbeschichtung trotz einer Schichtdicke von nur ca. 0,05 oder 0,2 µm µm ein außerordentlich hochwertiger chromfreier Film hergestellt werden konnte, der eine außerordentlich gute Lackhaftungsfestigkeit auf der erfindungsgemäßen Beschichtung ergibt. Weiterhin war es überraschend, daß der Zusatz feinteiliger Partikel eine signifikante Verbesserung der Lackhaftungsfestigkeit ergab, wobei eine Verbesserung der Korrosionsbeständigkeit durch Einlagerung der anorganischen Partikel erhofft werden konnte, aber eine Verbesserung der Lackhaftungsfestigkeit nicht absehbar war.

### Beispiele:

Die im folgenden beschriebenen Beispiele sollen den Gegenstand der Erfindung näher erläutern. Die angegebenen Konzentrationen und Zusammensetzungen beziehen sich auf die Behandlungslösung selbst und nicht auf ggf. verwendete Ansatzlösungen höherer Konzentration. Alle Konzentrationsanangaben sind als Festkörperanteile zu verstehen, d.h., die Konzentrationen beziehen sich auf die Gewichtsanteile der wirksamen Komponenten unabhängig davon, ob die eingesetzten Rohstoffe in verdünnter Form z.B. als wässerige Lösungen vorlagen. Die Oberflächenbehandlung der Prüfbleche erfolgte stets in der gleichen Weise und umfaßte im einzelnen die folgenden Schritte:
I. alkalische Reinigung im Spritzverfahren mit Gardoclean® S5160
II. Spülen mit Wasser
III. Spülen mit VE-Wasser
IV. Auftrag der erfindungsgemäßen Behandlungslösungen mittels Chemcoater
V. Trocknen im Umluftofen (PMT: 60 bis 80 °C)
VI. Beschichtung der vorbehandelten Oberflächen mit Coil Coating-Lacksystemen (Primer und Top Coat).

Für die Versuche wurde ein Polyethylen-Acrylat-Copolymer mit einer Säurezahl von etwa 30 und mit einem Schmelzbereich bei einer Temperatur im Bereich von 65 bis 90 °C gewählt. Das verwendete Polyacrylsäure-Vinylphosphonat-Copolymer wies eine Säurezahl von etwa 620 und seine 5%-ige wässerige Lösung einen pH-Wert von ziemlich genau 2,0 auf. Als Polyacrylsäure wurde technisch reine Polyacrylsäure mit einer Säurezahl von etwa 670 und mit einem Molekulargewicht von etwa 100.000 u eingesetzt. Bei den eingesetzten Silanen sind die technisch reinen Verbindungen zugesetzt worden, die in der wässerigen Zusammensetzung hydrolysierten und die insbesondere beim Trocknen und Aushärten zu Siloxanen umgesetzt wurden.

Alle erfindungsgemäßen Beispiele wurden ohne Zusatz eines organischen Lösemittels angesetzt. In einzelnen Beispielen, z.B. bei den Beispielen 1 bis 4 und 8 bis 10 sowie bei Beispiel 15, wurde der pH-Wert durch Zusatz von Ammoniak auf den in Tabelle 1 angegebenen Wert angepaßt. Es wurden ansonsten keine nicht bei den Beispielen aufgeführten Additive zugesetzt. Es können jedoch kleine Mengen an Additiven bereits beim Rohstoffhersteller zugesetzt worden sein. Der Restgehalt zu 100 Gew.-% bzw. zu 1000 g/L ergibt den Wassergehalt.

Das Mischen der einzelnen Komponenten konnte meistens in beliebiger Reihenfolge durchgeführt werden. Allerdings ist beim Zusatz von Mangancarbonat, Zirkonammoniumcarbonat oder Aluminiumhydroxid darauf zu achten, daß diese Substanzen zunächst in den konzentrierten sauren Komponenten aufgelöst werden, bevor die Hauptmenge an Wasser zugesetzt wird. Bei dem Zusatz von Aluminiumhydroxid bzw. Mangancarbonat wird darauf geachtet, daß diese Stoffe in der wässerigen Zusammensetzung vollständig gelöst vorliegen.

### Erfindungsgemäßes Beispiel 1:

Stahlbleche, die aus handelsüblichem kaltgewalzten Stahlband erhalten wurden, wurden in einem alkalischen Spritzreiniger zunächst entfettet und anschließend mit der erfindungsgemäßen wässerigen Zusammensetzung behandelt. Dabei wurde eine definierte Menge der Behandlungslösung so aufgetragen, daß sich eine Naßfilmdicke von ca. 6 ml/m² ergab. Die Behandlungslösung enthielt neben Wasser und Fluorokomplexen des Titans und Zirkoniums wasserlösliche Copolymere auf Basis von Acrylat und einer organischen Phosphor-haltigen Säure sowie eine wässerige Dispersion anorganischer Partikel in Form von pyrogener Kieselsäure. Die Lösung hatte die folgende Zusammensetzung:

| | |
|---|---|
| 1,6 g/L Hexafluorozirkonsäure, | 0,8 |
| g/L Hexafluorotilansäure, | 2 g/L Polyacryl- |
| säure-Vinylphosphonat-Copolymer, | 2 g/L SiO2 (als pyro-gene Kieselsäure), |
| 1 g/L Zitronensäure. | |

Die Kieselsäure-Dispersion enthielt Partikel mit einem mittleren Partikeldurchmesser gemessen durch Rasterelektronenmikroskopie im Bereich von etwa 20 bis 50 nm. Die Bestandteile wurden in der angegebenen Reihenfolge gemischt und der pH-Wert der Lösung anschließend mit einer fluoridhaltigen Ammoniaklösung auf 4,5 eingestellt. Die wässerige Zusammensetzung enthielt 3,4 g/L Säuren, 4 g/L Feststoff und im übrigen nur noch Wasser. Die Lösung wurde nach Auftrag in einem Umluftofen bei ca. 70 °C PMT (peak-metal-temperature) getrocknet. Die in dieser Weise vorbehandelten Stahlbleche wurden mit einem handelsüblichen chromfreien Coil-Coating-Lacksystem beschichtet.

### Erfindungsgemäßes Beispiel 2:

Stahlbleche wurden wie in Beispiel 1 beschrieben behandelt, jedoch mit einer Zusammensetzung, die als Übergangsmetall nur Titan und die anorganischen Partikel in Form einer wässerigen kolloidalen Silica-Dispersion enthielt:

| | |
|---|---|
| 2 g/L Hexafluorotitansäure, | 2 |
| g/L Polyacrylsäure-Vinylphosphonat-Copolymer, | 2 g/L SiO2 (als kolloidale Silica-Dispersion), |
| 0,5 g/L Zitronensäure. | |

Die Silica-Dispersion enthielt Partikel mit einem mittleren Partikeldurchmesser gemessen durch Rasterelektronenmikroskopie im Bereich von etwa 8 bis 20 nm.

### Erfindungsgemäßes Beispiel 3:

Stahlbleche wurden wie in Beispiel 1 beschrieben behandelt, jedoch mit einer Zusammensetzung, die zusätzlich ein hydrolisiertes Alkoxysilan als Kupplungsreagenz enthielt:

| | |
|---|---|
| 2 g/L Hexafluorozirkonsäure, | 2 |
| g/L Polyacrylsäure-Vinylphosphonat-Copolymer, | 2 g/L SiO2 (als kolloidale Silica-Dispersion), |
| silan (AMEO). | 2,5 g/L Aminoproyitrimethoxy- |

Zur Herstellung des Bades wurde zunächst die Silanverbindung in einer essigsauren Lösung unter mehrstündigem Rühren hydrolysiert, bevor die restlichen Bestandteile hinzugefügt wurden. Anschließend wurde ein pH-Wert von 5 eingestellt.

### Erfindungsgemäßes Beispiel 4:

Ausgehend von einem in Wasser unlöslichen Polyethylen-Acrylsäure-Copolymer wurde durch Zugabe einer geeigneten Menge einer Ammoniaklösung bei ca. 95 °C unter Rühren und Rückflußkühlung eine 25 %-ige stabile, wässerige Dispersion erhalten. Mit der so erhaltenen Dispersion wurde eine Behandlungslösung hergestellt, die wie folgt zusammengesetzt war:

| | |
|---|---|
| 5 g/L Polyethylen-Acrylat-Copolymer (als wässerige Dispersion), | 2 |
| g/L Zirkonammoniumcarbonat, | 10 g/L SiO2 (als pyrogene Kieselsäure). |

Der pH-Wert der Behandlungslösung wurde auf 8,5 eingestellt. Dabei wurde darauf geachtet, daß der pH-Wert der Lösung während der Herstellung nicht unter einen Wert von 7,5 absinkt, da es sonst zu Ausfällungen des Polymers oder der pyrogenen Kieselsäure hätte kommen können. Desweiteren wurde darauf geachtet, daß die Trocknung des Films bei einer PMT von mindestens 80 °C erfolgt. Ansonsten erfolgte die Behandlung des Stahlbandes wie in Beispiel 1 beschrieben.

### Erfindungsgemäßes Beispiel 5:

Feuerverzinkte Stahlbleche (HDG) mit einem Zinkanteil von über 95 % in der Verzinkungsschicht wurden in der gleichen Weise wie die Stahlbleche in den zuvor beschriebenen Beispielen gereinigt, entfettet und einer Oberflächenbehandlung mit der nachfolgend beschriebenen Zusammensetzung unterzogen:

| | |
|---|---|
| 2 g/L Hexafluorotitansäure, | 1,8 |
| g/L Polyacrylsäure (Molekulargewicht: ca. 100.000), | 5 g/L SiO2 (als pyrogene Kieselsäure). |

Die Bestandteile wurden in der angegebenen Reihenfolge in wässeriger Lösung bzw. Dispersion zusammengegeben.

### Erfindungsgemäßes Beispiel 6:

Feuerverzinkte Stahlbleche wurden analog zu Beispiel 5 behandelt, jedoch mit einer Zusammensetzung, die die anorganischen Partikel in Form einer kolloidalen Lösung enthielt:

| | |
|---|---|
| 2 g/L Hexafluorozirkonsäure, | 1,8 |
| g/L Polyacrylsäure (Molekulargewicht: ca. 100.000), | 2 g/L SiO2 (als kolloidale Silica-Dispersion). |

Die in der Zusammensetzung enthaltenen Partikel wiesen einen mittleren Partikeldurchmesser im Bereich von 12 bis 16 nm auf.

### Erfindungsgemäßes Beispiel 7:

Feuerverzinkte Stahlbleche wurden analog zu Beispiel 6 behandelt, jedoch mit einer Behandlungslösung, deren Anteil an anorganischen Partikeln um das Fünffache gegenüber der in Beispiel 6 angegebenen Zusammensetzung erhöht war:
2 g/L Hexafluorozirkonsäure,,
1,8 g/L Polyacrylsäure (Molekulargewicht: ca.100.000),
10 g/L SiO2 (als kolloidale Silica-Dispersion).

Die Erhöhung der Partikelkonzentration über die optimalen Werte hinaus führte zu einer Verschlechterung vor allem der Haftungseigenschaften einer nachfolgend aufgetragenen weiteren organischen Beschichtung oder Lackierung.

### Erfindungsgemäßes Beispiel 8:

Ähnlich wie bei Beispiel 3 für Stahloberflächen wurden feuerverzinkte Stahlbleche mit einer Zusammensetzung behandelt, die neben Fluorometallat, Polymeren und anorganischen Partikeln ein in wässeriger Lösung hydrolysiertes Silan enthielt. Die Behandlungslösung setzte sich dabei aus folgenden Bestandteilen zusammen:

| | |
|---|---|
| 2 g/L Hexafluorozirkonsäure, | 1,8 g/L |
| Polyacrylsäure (Molekulargewicht ca. 100.000), | |
| 4 g/L SiO2 (als kolloidale Silica-Dispersion), | |
| 2,5 g/L 3-Glycidyloxypropyl-trimethoxysilan (GLYMO). | |

Zur Herstellung wurde die Silankomponente zunächst in wässeriger Lösung hydrolysiert, und danach wurden die restlichen Bestandteile hinzugefügt.

### Erfindungsgemäßes Beispiel 9:

Ähnlich wie bei dem erfindungsgemäßen Beispiel 4 für Stahloberflächen wurden feuerverzinkte Stahlbleche mit einer alkalisch eingestellten Behandlungslösung vom pH-Wert 9 beschichtet, die die folgende Zusammensetzung aufwies:

| | |
|---|---|
| 5 g/L Polyethylen-Acrylat-Copolymer (als wässerige Dispersion), | 2 g/L |
| Zirkonammoniumcarbonat, | 4 g/L SiO2 (als kolloidale Silica-Dispersion). |

Auch hier betrug die Temperatur der Blechoberfläche während der Trocknung des Films mindestens 80 °C.

### Erfindungsgemäßes Beispiel 10:

Feuerverzinkte Stahloberflächen wurden entsprechend dem vorangegangenen Beispiel 9 mit einer alkalischen Zusammensetzung von pH-Wert 9 behandelt, die neben der Polymerdispersion und der Zr-Komponente eine wässerige Dispersion von TiO2-Partikeln mit einer durchschnittlichen Partikelgröße von 5 nm enthielt und die wie folgt zusammengesetzt war:

| | |
|---|---|
| 5 g/L Polyethylen-Acrylat-Copolymer (als wässerige Dispersion), | 2 g/L |
| Zirkonammoniumcarbonat, | 4 g/L TiO2 (als wässerige Dispersion). |

### Erfindungsgemäßes Beispiel 11

Entsprechend dem erfindungsgemäßen Beispiel 10 wurden feuerverzinkte Stahloberflächen mit einer TiO2-haltigen Zusammensetzung behandelt, die jedoch im Gegensatz zu dem vorangegangenen Beispiel einen sauren pH-Wert von 3 aufwies und neben den Titan- und Zirkoniumverbindungen zusätzlich Aluminiumionen enthielt.

| | |
|---|---|
| 3 g/L Hexafluorozirkonsäure, | 2 |
| g/L Hexafluorotitansäure, | 0,3 g/L Al(OH)3, |
| | 2 g/L Polyacrylsäure |
| (Molekulargewicht: ca. 100.000), | 4 g/L TiO2 (als wässerige Dispersion). |

Die TiO2-haltigen Behandlungslösungen weisen im Vergleich zu den SiO2-haltigen Zusammensetzungen in der Regel nochmals verbesserte Korrosionsschutzeigenschaften insbesondere auf feuerverzinkten Oberflächen auf. Allerdings weisen diese Zusammensetzungen gegenüber den SiO2-haltigen Lösungen eine deutlich verringerte Lagerstabilität auf.

### Erfindungsgemäßes Beispiel 12:

Entsprechend dem erfindungsgemäßen Beispiel 11 wurden feuerverzinkte Stahlbleche mit einer Zusammensetzung behandelt, die zusätzlich Mangan-ionen enthielt:

| | |
|---|---|
| 3 g/L Hexafluorozirkonsäure, | 2 |
| g/L Hexafluorotitansäure, | 0,3 g/L Al(OH)3, |
| | 2 g/L Polyacrylsäure |
| (Molekulargewicht: ca. 100.000), | 4 g/L TiO2 (als wässerige Dispersion), |
| | 1 g/L MnCO3. |

Der Zusatz von Mn zu der Behandlungslösung verbessert zum einen die Korrosionsschutzwirkung der Beschichtung und erhöht insbesondere die Beständigkeit der Schicht gegenüber alkalischen Medien wie z.B. gegenüber in der Bandbeschichtung üblichen Reinigungsmitteln.

### Erfindungsgemäßes Beispiel 13:

Entsprechend dem erfindungsgemäßen Beispiel 12 wurden feuerverzinkte Stahlbleche mit einer Zusammensetzung behandelt, die anstelle der TiO2-Dispersion eine kolloidale Silica-Dispersion enthielt:

| | |
|---|---|
| 3 g/L Hexafluorozirkonsäure, | 2 |
| g/L Hexafluorotitansäure, | 0,3 g/L Al(OH)3, |
| | 2 g/L Polyacrylsäure |
| (Molekulargewicht: ca. 100.000), | 2 g/L SiO2 (als kolloidale Silica-Dispersion), |
| | 1 g/L MnCO3. |

Der Zusatz von Mn zu der Behandlungslösung verbessert zum einen die Korrosionsschutzwirkung der Beschichtung und erhöht insbesondere die Beständigkeit der Schicht gegenüber alkalischen Medien wie z.B. gegenüber in der Bandbeschichtung üblichen Reinigungsmitteln. Anstelle der TiO2-Dispersion wurde kolloidales SiO2 zugesetzt.

### Erfindungsgemäßes Beispiel 14:

Entsprechend dem erfindungsgemäßen Beispiel 14 wurden feuerverzinkte Stahlbleche mit einer Zusammensetzung behandelt, die keine Hexafluorotitansäure und einen etwas verringerten Gehalt an Hexafluorozirkonsäure bzw. Polyacrylsäure enthielt:

| | |
|---|---|
| 2 g/L Hexafluorozirkonsäure, | 0,3 |
| g/L Al(OH)3, | 1,8 g/L Polyacryl- |
| säure (Molekulargewicht: ca. 100.000), | 2 g/L SiO2 (als kolloidale Silica-Dispersion), |
| | 1 g/L MnCO3. |

Der Zusatz von Mn zu der Behandlungslösung verbessert zum einen die Korrosionsschutzwirkung der Beschichtung und erhöht insbesondere die Beständigkeit der Schicht gegenüber alkalischen Medien wie z.B. gegenüber in der Bandbeschichtung üblichen Reinigungsmitteln. Im Vergleich zu Beispiel 13 wurde der Gehalt an H2TiF6 weggelassen und der Gehalt an H2ZrF6 verringert. Dadurch wurde die Lackhaftung verbessert.

### Erfindungsgemäßes Beispiel 15:

Entsprechend dem erfindungsgemäßen Beispiel 14 wurden feuerverzinkte Stahlbleche mit einer Zusammensetzung behandelt, die keinen Gehalt an Aluminiumhydroxid enthielt:

| | |
|---|---|
| 2 g/L Hexafluorozirkonsäure, | 1,8 |
| g/L Polyacrylsäure (Molekulargewicht: ca. 100.000), | 2 g/L SiO2 (als kolloidale- Silica-Dispersion), |
| | 1 g/L MnC03. |

Der Zusatz von Mn zu der Behandlungslösung verbessert zum einen die Korrosionsschutzwirkung der Beschichtung und erhöht insbesondere die Beständigkeit der Schicht gegenüber alkalischen Medien wie z.B. gegenüber in der Bandbeschichtung üblichen Reinigungsmitteln. Der pH-Wert wurde durch Zusatz von Ammonik angepaßt: Im Vergleich zu Beispiel 14 wurde der Zusatz von Aluminiumhydroxid weggelassen.

### Erfindungsgemäßes Beispiel 16:

Ausgehend von der Zusammensetzung des Beispiels 9 wurde der Gehalt an Polyethylen-Acrylat von 5 auf 10 g/L hochgesetzt. Dadurch wird die erfindungsgemäße Beschichtung dicker ausgebildet.

### Erfindungsgemäßes Beispiel 17:

Entsprechend dem erfindungsgemäßen Beispiel 16 wurde zu der Zusammensetzung des Beispiels 16 noch ein Zusatz von 0,5 g/L an Polyethylenwachs mit einem Schmelzpunkt im Bereich von 125. bis 165 °C zugesetzt. Dadurch wurde die Gleitfähigkeit der Beschichtung deutlich verbessert.

### Erfindungsgemäßes Beispiel 18:

Der wässerigen erfindungsgemäßen Zusammensetzung des Beispiels 14 wurde der Korrosionsinhibitor Diethylthioharnstoff zu 1,0 g/L zugesetzt, wodurch sich die Korrosionsbeständigkeit noch etwas verbesserte und eine höhere Sicherheit für die Serienfertigung erzielt wurde.

### Vergleichsbeispiel 1:

Da die Korrosionsprüfergebnisse und Beurteilungen von Lackhaftungsprüfungen im allgemeinen sehr stark von dem verwendeten Lacksystem und den speziellen Prüfbedingungen abhängen, sind Absolutwerte für solche Testergebnisse nur bedingt aussagekräftig. Daher wurden bei der Durchführung der in den erfindungsgemäßen Beispielen beschriebenen Experimente stets vergleichend Materialproben mit einem dem Stand der Technik entsprechenden Chromatierverfahren beschichtet, das zu einer Chromauflage von ca. 20 mg/m² führte. Hierzu wurde Gardobond® C4504 (Chemetall GmbH), mit einer Badkonzentration von 43 g/L des handelsüblichen Konzentrates in der gleichen Weise wie die vorgenannten Lösungen appliziert, im Umluftofen getrocknet und anschließend mit Coil-Coating-Lacken beschichtet.

### Vergleichsbeispiel 2:

Die in dem erfindungsgemäßen Verfahren eingesetzten anorganischen Verbindungen in Partikelform sind für die Haftung einer nachfolgend aufgetragenen weiteren organischen Beschichtung und für die Korrosionseigenschaften des Verbundes aus Metall, erfindungsgemäßer Vorbehandlung und organischer Beschichtung entscheidend. Als Vergleichsexperiment wurden daher Stahloberflächen mit einer wässerigen Zusammensetzung behandelt, die bezüglich ihrer Inhaltsstoffe dem erfindungsgemä-βen Verfahren weitgehend entsprach, jedoch den wichtigen Zusatz der anorganischen Partikel nicht enthielt. Die Zusammensetzung enthielt im einzelnen

| | |
|---|---|
| 2 g/L Hexafluorotitansäure, | 2 |
| g/L Polyacrylsäure-Vinylphosphonat-Copolymer, | 0,5 g/L Zitronensäure. |

Die Zusammensetzung ergab einen im Vergleich zu der im erfindungsgemäßen Beispiel 2 beschriebenen äquivalenten Zusammensetzung mit dem Zusatz einer kolloidalen Silica-Dispersion deutlich reduzierten Korrosionsschutz.

### Vergleichsbeispiel 3:

Entsprechend dem Vergleichsbeispiel 2 für Stahloberflächen wurden feuerverzinkte Stahlbleche mit einer Zusammensetzung behandelt, die erfindungsgemäße Bestandteile enthielt jedoch keine anorganischen Verbindungen in Partikelform.

| | |
|---|---|
| 2 g/L Hexafluorotitansäure, | 1,8 |
| g/L Polyacrylsäure (Molekulargewicht: ca. 100.000). | |

Die Zusammensetzung ergab einen im Vergleich zu der im erfindungsgemäßen Beispiel 6 beschriebenen äquivalenten Zusammensetzung mit dem Zusatz einer kolloidalen Silica-Dispersion sowohl eine deutlich reduzierte Haftung einer nachfolgend applizierten Coil-Coating-Lackierung als auch einen deutlich reduzierten Korrosionsschutz.

### Vergleichsbeispiel 4:

Die Wahl eines geeigneten organischen Filmbildners in Form von wasserlöslichen oder wasserdispergierbaren Polymeren ist ebenfalls von entscheidender Bedeutung für die Korrosionsschutzwirkung des Systems sowie die Haftung einer nachfolgend aufgetragenen Lackierung. Sowohl das Fehlen der Badkomponente als auch die Wahl einer ungeeigneten Polymerverbindung hat einen erheblichen negativen Einfluß auf Korrosionsschutz und Lackhaftung. Als Beispiel für ein im Sinne der Erfindung ungeeignetes Polymersystem sei eine wässerige Lösung eines Polyvinylpyrrolidons der Fa. BASF genannt. Die Zusammensetzung der Badlösung entsprach ansonsten dem erfindungsgemäßen Verfahren.

| | |
|---|---|
| 2 g/L Hexafluorozirkonsäure, | 2 g/L |
| Polyvinylpyrrolidon (als wässerige Lösung), | 2 g/L SiO2 |
| (als kolloidale Silica-Dispersion). | |

Mit dieser Zusammensetzung behandelte feuerverzinkte Stahlbleche wiesen eine gegenüber den vergleichbaren erfindungsgemäßen Beispielen deutlich reduzierte Lackhaftung sowie einen schlechteren Korrosionsschutz auf. Welche Faktoren auf molekularer Ebene ein Polymersystem für eine Anwendung im Sinne der Erfindung geeignet machen ist bislang nicht ausreichend geklärt. Die in den erfindungsgemä-βen Beispielen als geeignet angegebenen Polymersyteme wurden durch Screeningverfahren ermittelt.

### Vergleichsbeispiel 5:

Insbesondere auf Aluminiumoberflächen kommen zum Teil auch Vorbehandlungsverfahren zum Einsatz, die neben komplexen Fluoriden des Zirkoniums oder des Titans keine weiteren Bestandteile wie organische Filmbildner oder anorganische Partikel enthalten. Auf Zink- oder Eisenoberflächen bieten solche Verfahren jedoch keinen ausreichenden Korrosionsschutz. Dies kann durch Korrosionsprüfergebnisse belegt werden, die an feuerverzinkten Stahloberflächen nach einer Behandlung mit einer Zusammsetzung erhalten wurden, die Hexafluorozirkonsäure als einzige Komponente enthielt. Die wässerige Zusammensetzung dieses Vergleichsbeispiels enthielt 2 g/L Hexafluorozirkonsäure.

In Tabelle 1 werden die Zusammensetzungen der in den Beispielen aufgeführten Versuchsbäder vergleichend dargestellt. Tabelle 2 faßt die Ergebnisse der Korrosions- und Lackhaftungsprüfungen an den mit diesen Zusammensetzungen erhaltenen Beschichtungen zusammen.

**Tabelle 1: Übersicht über die Zusammensetzung der Beispiele und Vergleichsbeispiele. "Polyacryl" steht für Polyacrylsäure, Zr(CO₃)₂für ein Zr-Ammoniumcarbonat.**

| Bsp. | Zr, Ti, Cr | c [g/L] | Polymer | c [g/L] | Anorgan. Partikel | c [g/L] | Additive, Zusätze | c [g/L] | pH |
|---|---|---|---|---|---|---|---|---|---|
| B 1 | H₂ZrF₆, | 1,6 | Polyacryl/Vinylphosphonat | 2,0 | pyrogenes | 2 | Zitronensäure | 1,0 | 4,5 |
| | H₂TiF₆ | 0,8 | | | SiO₂ | | | | |
| B 2 | H₂TiF₆ | 2,0 | Polyacryl/ Vinylphosphonat | 2,0 | kolloidales SiO₂ | 2 | Zitronensäure | 0,5 | 4,5 |
| B 3 | H₂ZrF₆ | 2,0 | Polyacryl/ Vinylphosphonat | 2,0 | kolloidales SiO₂ | 2 | AMEO | 2,5 | 5 |
| B 4 | Zr(CO₃)₂ | 2,0 | Polyethylen/Acrylat | 5,0 | pyrogenes SiO₂ | 10 | - | - | 8,5 |
| B 5 | H₂TiF₆ | 2,0 | Polyacryl | 1,8 | pyrogenes SiO₂ | 5 | - | - | 2 |
| B 6 | H₂ZrF₆ | 2,0 | Polyacryl | 1,8 | kolloidales SiO₂ | 2 | - | - | 2 |
| B 7 | H₂ZrF₆ | 2,0 | Polyacryl | 1,8 | kolloidales SiO₂ | 10 | - | - | 2 |
| B 8 | H₂TiF₆ | 2,0 | Polyacryl | 1,8 | kolloidales SiO₂ | 4 | GLYMO | 2,5 | 5 |
| B 9 | Zr(CO₃)₂ | 2,0 | Polyethylen/Acrylat | 5,0 | kolloidales SiO₂ | 4 | - | - | 9 |
| B 10 | Zr(CO₃)₂ | 2,0 | Polyethylen/Acrylat | 5,0 | TiO₂- Dispersion | 4 | - | - | 9 |
| B 11 | H₂ZrF₆, | 3,0 | Polyacryl | 2,0 | TiO₂- | 4 | Al(OH)₃ | 0,3 | 3 |
| | H₂TiF₆ | 2,0 | | | Dispersion | | | | |
| B 12 | H₂ZrF₆, | 3,0 | Polyacryl | 2,0 | TiO₂- | 4 | Al(OH)₃ | 0,3 | 3 |
| | H₂TiF₆ | 2,0 | | | Dispersion | | MnCO₃ | 1,0 | |
| B 13 | H₂ZrF₆, | 3,0 | Polyacryl | 2,0 | kolloidales | 2 | Al(OH)₃ | 0,3 | 3 |
| | H₂TiF₆ | 2,0 | | | SiO₂ | | MnCO₃ | 1,0 | |
| B 14 | H₂ZrF₆ | 2,0 | Polyacryl | 1,8 | kolloidales | 2 | AI(OH)₃ | 0,3 | 3 |
| | | | | | SiO₂ | | MnCO₃ | 1,0 | |
| B 15 | H₂ZrF₆ | 2,0 | Polyacryl | 1,8 | kolloidales SiO₂ | 2 | MnCO₃ | 1,0 | 3 |
| B 16 | Zr(CO₃)₂ | 2,0 | Polyethylen/Acrylat | 10,0 | kolloidales SiO₂ | 4 | - | - | 9 |
| B 17 | Zr(CO₃)₂ | 2,0 | Polyethylen/Acrylat | 10,0 | kolloidales SiO₂ | 4 | Polyethylenwachs | 0,5 | 9 |
| B 18 | H₂ZrF₆ | 2,0 | Polyacryl | 1,8 | kolloidales SiO₂ | 2 | Al(OH)₃ MnCO₃ Diethylthiharnstoff | 0,3 1,0 1,0 | 3 |
| VB 1 | Gardobond® C 4504 (Cr VI) | 43 | - | - | - | - | - | - | 2 |
| VB 2 | H₂TiF₆ | 2 | Polyacryl/ Vinylphosphonat | 2 | - | - | Zitronensäure | 0,5 | 4,5 |
| VB 3 | H₂ZrF₆ | 2 | Polyacryl | 1,8 - | - | - | - | - | 2 |
| VB 4 | H₂ZrF₆ | 2 | Polyvinylpyrrolidon | 2 | kolloidales SiO₂ | 2 | - | - | 2 |
| VB 5 | H₂ZrF₆ | 2 | - | - | - | - | - | - | 2 |

### Beispiel 2: Ergebnisse der Adhäsions- und Korrosionsschutzergebnisse.

| Beispiel | Substrat | Schicht gewicht für Zr-bzw. Ti-Gehalt mg/m² | | T-Bend T1* (Enthaftung in %) | Erichsen-Tiefung nach Gitterschnitt* (Enthaftung in %) | Salzsprühtest (DIN 50021) U [mm] nach 480 h | | VDA-Wechseltest (VDA 621-415) U [mm] nach 10 Zyklen | |
|---|---|---|---|---|---|---|---|---|---|
| | | | | | | Ritz | Kante | Ritz | Kante |
| B 1 | Stahl | 4,2 | 1,4 | 5 | 0 | 5 | 4 | - | - |
| B 2 | Stahl | | 3,5 | 1 | 0 | 3,5 | 4 | - | - |
| B 3 | Stahl | 5,3 | | 5 | 2 | 3 | 4 | - | - |
| B 4 | Stahl | 5,2 | | 5 | 1 | 2 | 3 | - | - |
| B 5 | HDG | | 3,5 | 5 | 2 | 1 | 2,5 | 2 | 3 |
| B 6 | HDG | 5,3 | | 2 | 0 | 0,5 | 2 | 1 | 2,5 |
| B 7 | HDG | 5,3 | | 10 | 2 | 0,5 | 1,5 | 1 | 2,5 |
| B 8 | HDG | | 3,5 | 1 | 0 | 1 | 2 | 1 | 2,5 |
| B 9 | HDG | 5,1 | | 2 | 0 | 1,5 | 2 | 1 | 2 |
| B 10 | HDG | 5,3 | | 2 | 1 | 1,5 | 2 | 1 | 1,5 |
| B 11 | HDG | 7,9 | 3,5 | 10 | 1 | 1 | 1 | 0,5 | 1 |
| B 12 | HDG | 7,9 | 3,5 | 5 | 1 | 0, 5 | 1 | 0,5 | 1 |
| B 13 | HDG | 7,9 | 3,5 | 5 | 1 | 1 | 1,5 | 0,5 | 1 |
| B 14 | HDG | 5,3 | | 1,5 | 1 | 0,5 | 0,75 | 0,5 | 0,5 |
| B 15 | HDG | 5,3 | | 2 | 1 | 0,5 | 1 | 0,5 | 1 |
| B 16 | HDG | 5,3 | | 5 | 1 | 1 | 1,5 | 0,5 | 1 |
| B 17 | HDG | 5,1 | | 5 | 1 | 1 | 1,5 | 0,5 | 1 |
| B 18 | HDG | 5,3 | | 1,5 | 1 | 0,5 | 0,5 | 0,5 | 0,5 |
| VB 1 | Stahl | - | | 0 | 0 | 0,5 | 0,5 | - | - |
| VB 1 | HDG | - | | 2 | 1 | 0,5 | 1 | 0,5 | 0,5 |
| VB 2 | Stahl | | 3,5 | 60 | 8 | 7 | 5,5 | - | - |
| VB 3 | HDG | | 3,5 | 70 | 10 | 6 | 7 | 3 | 4,5 |
| VB 4 | HDG | 5,3 | | 80 | 15 | 4 | 7 | 2 | 2,5 |
| VB 5 | HDG | 5,3 | | 60 | 6 | 3 | 5 | 2,5 | 4 |

Die Haftungsprüfung mittels T-Bend-Test wurde nach NCCA-Norm durchgeführt, d.h. bei einer Biegung von T1 betrug der Zwischenraum zwischen den umgebogenen Blechhälften eine Blechstärke von ca. 1 mm, so daß der Biegungsdurchmesser etwa 1 mm betrug. Nach dieser sehr starken Biegung wurde die Lackhaftung durch Abrißversuche mit Klebeband geprüft und das Ergebnis als prozentualer Flächenanteil der Lackabplatzungen und Enthaftungen angegeben.

Bei der Haftungsprüfung nach Erichsen wurde zunächst ein Gitterschnitt an der lakkierten Metalloberfläche angebracht und anschließend eine Erichsen-Tiefung von 8 mm ausgeführt. Auch hier wurde die Lackhaftung durch Abrißversuche mit Klebeband geprüft und das Ergebnis in Form der prozentualen Lackenthaftung angegeben.

Die Ergebnisse verdeutlichen, daß die erfindungsgemäßen Behandlungslösungen hinsichtlich der Haftungseigenschaften einer nachfolgend aufgetragenen organischen Beschichtung und der mit dem Beschichtungsaufbau erzielbaren Korrosionseigenschaften dem als Standard herangezogenen Chromatierverfahren vergleichbare Ergebnisse liefern. Den Vergleichsbeispielen entnimmt man, daß die Eigenschaften der Beschichtung hauptsächlich auf der richtigen Wahl der Polymere und der anorganischen Partikel beruhen. Dabei kann das erfindungsgemäße Behandlungsverfahren sowohl im leicht alkalischen als auch im sauren pH-VVertbereich arbeiten, wenn für den jeweiligen pH-Wertbereich geeignete Polymersysteme ausgewählt werden.

Generell kann man aus den angeführten Beispielen schlußfolgern, daß mit sauren Zusammensetzungen im pH-Wertebereich von 1 bis 5 im allgemeinen ein besserer Korrosionsschutz erzielt werden kann als mit alkalischen. Leicht alkalische Behandlungslösungen können jedoch vorteilhaft sein, wenn Stahloberflächen oder bereits phosphatierte Oberflächen behandelt werden sollen, bei denen ein Beizangriff so gering wie möglich gehalten werden soll. Die anorganischen Partikel, die in den Behandlunglösungen verwendet werden, weisen idealerweise einen Partikeldurchmesser im Bereich von 5 bis 30 nm auf. Hier sind kolloidale Silicalösungen den entsprechenden pulverförmigen Produkten pyrogener Kieselsäure vorzuziehen, da mit ihnen in der Regel bessere Haftungseigenschaften erzielt werden können. Dies ist wahrscheinlich auf die erheblich breitere Teilchengrößenverteilung der pyrogenen Produkte zurückzuführen. Es war überraschend, daß es möglich war, für feuerverzinkten Stahl eine Beschichtung zu entwickeln, die einer typischen Chromat-Vorbehandlung mindestens ebenbürtig ist.

Obwohl die Beschichtungen der erfindungsgemäßen Beispiele nur eine Schichtdicke im Bereich von 0,01 bis 0,2 µm, meistens im Bereich von 0,02 oder 0,03 bis 0,1 µm, aufwiesen, waren diese Beschichtungen von hervorragender Qualität.

## Patentansprüche

1. Verfahren zur Beschichtung einer metallischen Oberfläche mit einer weitgehend oder gänzlich von Chrum(VI)-Verbindungen freien wässerigen Zusammensetzung zur Vorbehandlung vor einer weiteren Beschichtung oder zur Behandlung, bei der der zu beschichtende Körper ggf. - insbesondere ein Band oder Bandabschnitt - nach der Beschichtung umgeformt wird, **dadurch gekennzeichnet, daß** die Zusammensetzung neben Wasser
a) mindestens einen organischen Filmbildner, der mindestens ein wasserlösliches oder wasserdispergiertes Polymer enthält das ein Kunstharz ist auf Basis von Polyacrylsäure, Polyacrylat oder/und Polyethylen-Acrylsäure oder ein Kunstharzgemisch oder/und ein Mischpolymerisat ist mit einem Gehalt an Kunstharz auf Basis Acrylat bzw. Polyacryl, wobei der Gesamtgehalt an organischem Filmbildner im Bereich von 0,2 bis 30 g/L liegt,
b) einen Gehalt an Kationen oder/und Hexafluorokomplexen von Kationen ausgewählt aus der Gruppe von Titan, Zirkonium, Hafnium, Silicium und Bor im Bereich von 0,1 bis 50 g/L,
c) mindestens eine anorganische Verbindung in Partikelform mit einem mittleren Partikeldurchmesser gemessen an einem Rasterelektronenmikroskop im Bereich von 0,005 bis zu 0,2 µm Durchmesser, wobei der Gesamtgehalt an diesen anorganischen Verbindungen im Bereich von 0,2 bis 25 g/L liegt,
d) ggf. mindestens ein Silan oder/und Siloxan berechnet als Silan und
e) ggf. mindestens einen Korrosionsinhibitor enthält,
wobei das Verhältnis des Gehalts an Kationen oder/und Hexafluorokomplexen von Kationen b) zum Gehalt an anorganischen Verbindungen in Partikelform c) in der wässerigen Zusammensetzung ≤ 5,5:1 beträgt.
wobei die saubere metallische Oberfläche mit der wässerigen Zusammensetzung in Kontakt gebracht und ein Partikel enthaltender Film auf der metallischen Oberfläche ausgebildet wird, der anschließend getrocknet wird und ggf. zusätzlich ausgehärtet wird und
wobei der getrocknete und ggf. auch ausgehärtete Film eine Schichtdicke im Bereich von 0,01 bis 0,5 µm aufweist.

2. Verfahren nach Anspruch 1, **dadurch gekennzeichnet, daß** eine metallische Oberfläche von Aluminium, Eisen, Kupfer, Magnesium, Nickel, Titan, Zinn, Zink oder von Aluminium, Eisen, Kupfer, Magnesium, Nickel, Titan, Zinn oder/und Zink enthaltenden Legierungen, insbesondere von Stahl- oder verzinkten Stahloberflächen, beschichtet wird.

3. Verfahren nach Anspruch 1 oder 2, **dadurch gekennzeichnet, daß** der organische Filmbildner in der Form einer Lösung, Dispersion, Emulsion, Mikroemulsion oder/und Suspension vorliegt.

4. Verfahren nach einem der vorstehenden Ansprüche, **dadurch gekennzeichnet, daß** der organische Filmbildner mindestens ein Kunstharz ist, insbesondere ein Kunstharz auf Basis Acrylat, Ethylen, Polyester, Poly- urethan, Siliconpolyester, Epoxid, Phenol, Styrol, Hamstoff-Formaldehyd, deren Derivate, Copolymere, Polymere, Mischungen oder/und Mischpolymerisate.

5. Verfahren nach einem der vorstehenden Ansprüche, **dadurch gekennzeichnet, daß** der organische Filmbildner ein Kunstharzgemisch oder/und Mischpolymerisat ist, das einen Gehalt an Kunstharz auf Basis Acrylat. Polyacryl, Ethylen, Polyethylen, Hamstoff-Formaldehyd, Polyester, Polyurethan, Polystyrol oder/und Styrol enthält, aus dem während bzw. nach der Abgabe von Wasser und anderen flüchtigen Bestandteilen ein organischer Film ausbildet wird.

6. Verfahren nach einem der vorstehenden Ansprüche, **dadurch gekennzeichnet, daß** der organische Filmbildner Kunstharze oder/und Polymere bzw. Derivate, Copolymere, Polymere, Mischungen oder/und Mischpolymerisate auf der Basis von Acrylat, Polyacryl, Polyethylenimin, Polyurethan, Polyvinylalkohol, Polyvinylphenol, Polyvinylpyrrolidon oder/und Polymsparaginsäure, insbesondere Copolymere mit einer Phosphor enthaltenden Vinylverbindung, enthält.

7. Verfahren nach einem der vorstehenden Ansprüche, **dadurch gekennzeichnet, daß** die Säurezahl der Kunstharze im Bereich von 5 bis 250 liegt.

8. Verfahren nach einem der vorstehenden Ansprüche, **dadurch gekennzeichnet, daß** die Molekulargewichte der Kunstharze, Copolymere, Polymere bzw. deren Derivate, Mischungen oder/und Mischpolymerisate im Bereich von mindestens 1000 u, vorzugsweise von mindestens 5000 u, besonders bevorzugt von 20.000 bis 200.000 u betragen.

9. Verfahren nach einem der vorstehenden Ansprüche, **dadurch gekennzeichnet, daß** der pH-Wert des organischen Filmblidners in einer wässerigen Zubereitung ohne Zugabe weiterer Verbindungen im Bereich von 1 bis 12 liegt.

10. Verfahren nach einem der vorstehenden Ansprüche, **dadurch gekennzeichnet, daß** der organische Filmbildner nur wasserlösliche Kunstharze oder/und Polymere enthält, insbesondere solche, die in Lösungen mit pH-Werten ≤ 5 stabil sind.

11. Verfahren nach einem der vorstehenden Ansprüche, **dadurch gekennzeichnet, daß** der organische Filmbildner Kunstharz oder/und Polymer enthält, die Carboxyl-Gruppen aufweisen.

12. Verfahren nach einem der vorstehenden Ansprüche, **dadurch gekennzeichnet, daß** die Säuregruppen der Kunstharze mit Ammonik, mit Aminen wie z.B. Morpholin, Dimethylethanolamin, Diethylethanolamin oder Triethanolamin oder/und mit Alkalimetallverbindungen wie z.B. Natriumhydroxid stabilisiert sind.

13. Verfahren nach einem der vorstehenden Ansprüche, **dadurch gekennzeichnet, daß** die wässerige Zusammensetzung 0,5 bis 10 g/L des organischen Filmbildners enthält.

14. Verfahren nach einem der vorstehenden Ansprüche, **dadurch gekennzeichnet, daß** die wässerige Zusammensetzung 0,2 bis 30 g/L an Kationen oder/und Hexafluorokomplexen von Kationen ausgewählt aus der Gruppe von Titan, Zirkonium, Hafnium, Silicium, Aluminium und Bor enthält.

15. Verfahren nach einem der vorstehenden Ansprüche, **dadurch gekennzeichnet, daß** der wässerigen Zusammensetzung Mn-Ionen mit einem Gehalt im Bereich von 0,05 bis 10 g/L zugesetzt werden.

16. Verfahren nach einem der vorstehenden Ansprüche, **dadurch gekennzeichnet, daß** der Gehalt an mindestens einem Silan oder/und Siloxan berechnet als Silan in der wässerigen Zusammensetzung vorzugsweise 0,1 bis 50 g/L beträgt.

17. Verfahren nach einem der vorstehenden Ansprüche, **dadurch gekennzeichnet, daß** die wässerige Zusammensetzung mindestens ein teilhydrolysiertes oder gänzlich hydrolysieries Silan enthält

18. Verfahren nach einem der vorstehenden Ansprüche, **dadurch gekennzeichnet, daß** mindestens ein Aminosilan, ein Epoxysilan, ein Vinylsilan oder/und mindestens ein entsprechendes Siloxan enthalten ist.

19. Verfahren nach einem der vorstehenden Ansprüche, **dadurch gekennzeichnet, daß** als anorganische Verbindung in Partikelform ein feinverteiltes Pulver, eine Dispersion oder eine Suspension wie zB. ein Carbonat, Oxid, Silicat oder Sulfat zugesetzt wird, insbesondere kolloidale oder amorphe Partikel.

20. Verfahren nach einem der vorstehenden Ansprüche, **dadurch gekennzeichnet, daß** als anorganische Verbindung in Partikelform Partikel mit einer mittleren Partikelgröße im Bereich von 8 nm bis 150 nm verwendet werden.

21. Verfahren nach einem der vorstehenden Ansprüche, **dadurch gekennzeichnet, daß** als anorganische Verbindung in Partikelform Partikel auf Basis von mindestens einer Verbindung des Aluminiums, Bariums, Cers oder/und anderer Seltenerdelemente, Kalziums, Lanthans, Siliciums, Titans, Yttriums, Zinks oder/und Zirkoniums zugesetzt werden.

22. Verfahren nach einem der vorstehenden Ansprüche, **dadurch gekennzeichnet, daß** als anorganische Verbindung in Partikelform Partikel auf Basis von Aluminiumoxid, Bariumsulfat, Cerdioxid, Seltenerdmischoxid, Siliciumdioxid, Silicat, Titanoxid, Yttriumoxid, Zinkoxid oder/und Zirkonoxid zugesetzt werden.

23. Verfahren nach einem der vorstehenden Ansprüche, **dadurch gekennzeichnet, daß** die wässerige Zusammensetzung 0,5 bis 10 g/L der mindestens einen anorganischen Verbindung in Partikelform enthält.

24. Verfahren nach einem der vorstehenden Ansprüche, **dadurch gekennzeichnet, daß** als organisches Lösemittel für die organischen Polymere mindestens ein wassermischbarer oder/und wasserlöslicher Alkohol, ein Glykolether bzw. N-Methylpyrrolidon oder/und Wasser verwendet wird, im Falle der Verwendung eines Lösemittelgemisches insbesondere eine Mischung aus Wasser mit mindestens einem langkettigen Alkohol, wie z.B. Propylenglykol, ein Esteralkohol, ein Glykolether oder/und Butandiol, vorzugsweise jedoch nur Wasser ohne organisches Lösemittel.

25. Verfahren nach einem der vorstehenden Ansprüche, **dadurch gekennzeichnet, daß** der Gehalt an organischem Lösemittel 0,1 bis 10 Gew.% beträgt.

26. Verfahren nach einem der vorstehenden Ansprüche, **dadurch gekennzeichnet, daß** als Korrosionsinhibitor eine organische Verbindung bzw. eine Ammonium-Verbindung, insbesondere ein Amin bzw. eine Amino-Verbindung, zugesetzt wird.

27. Verfahren nach einem der vorstehenden Ansprüche, **dadurch gekennzeichnet, daß** als Gleitmittel mindestens ein Wachs ausgewählt aus der Gruppe der Paraffine, Polyethylene und Polypropylene verwendet wird, insbesondere ein oxidiertes Wachs.

28. Verfahren nach Anspruch 27, **dadurch gekennzeichnet, daß** der Schmelzpunkt des als Gleitmittel eingesetzten Wachses im Bereich von 40 bis 160 °C liegt

29. Verfahren nach einem der vorstehenden Ansprüche, **dadurch gekennzeichnet, daß** die wässerige Zusammensetzung gegebenenfalls jeweils mindestens ein Biozid, einen Entschäumer oder/und ein Netzmittel enthält.

30. Verfahren nach einem der vorstehenden Ansprüche, **dadurch gekennzeichnet, daß** eine wässerige Zusammensetzung mit einem pH-Wert im Bereich von 0,5 bis 12 eingesetzt wird.

31. Verfahren nach einem der vorstehenden Ansprüche, **dadurch gekennzeichnet, daß** die wässerige Zusammensetzung bei einer Temperatur im Bereich von 5 bis 50 °C auf die metallische Oberfläche aufgebracht wird.

32. Verfahren nach einem der vorstehenden Ansprüche, **dadurch gekennzeichnet, daß** die metallische Oberfläche bei der Applikation der Beschichtung auf Temperaturen im Bereich von 5 bis 120 °C gehalten wird.

33. Verfahren nach einem der vorstehenden Ansprüche, **dadurch gekennzeichnet, daß** die beschichtete metallische Oberfläche bei einer Temperatur im Bereich von 20 bis 400 °C PMT (peak-metal-temperature) getrocknet wird.

34. Verfahren nach einem der vorstehenden Ansprüche, **dadurch gekennzeichnet, daß** die beschichteten Bänder zu einem Coil aufgewickelt werden, ggf. nach einer Abkühlung auf eine Temperatur im Bereich von 40 bis 70°C.

35. Verfahren nach einem der vorstehenden Ansprüche, **dadurch gekennzeichnet, daß** ein Standard-Coil-Coating-Lack F2-647 zusammen mit dem Top Coat-Lack F5-618 aufgebracht auf den getrockneten oder ausgehärteten Film eine Haftfestigkeit von maximal 10 % der enthafteten Fläche bei einem T-Bend-Test mit einer Biegung T1 nach NCCA ergibt.

36. Verfahren nach einem der vorstehenden Ansprüche, **dadurch gekennzeichnet, daß** die wässerige Zusammensetzung durch Aufwalzen, Fluten, Aufrakeln, Spritzen, Sprühen, Streichen oder Tauchen und ggf. durch nachfolgendes Abquetschen mit einer Rolle aufgetragen wird.

37. Verfahren nach einem der vorstehenden Ansprüche, **dadurch gekennzeichnet, daß** auf den teilweise oder gänzlich ausgehärteten Film jeweils mindestens eine Beschichtung aus Lack, Polymeren, Farbe, Klebstoff oder/und Klebstoffträger aufgebracht wird.

38. Verfahren nach einem der vorstehenden Ansprüche, **dadurch gekennzeichnet, daß** die beschichteten Metallteile, Bänder oder Bandabschnitte umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden.

39. Wässerige Zusammensetzung zur Vorbehandlung einer metallischen Oberfläche vor einer weiteren Beschichtung oder zur Behandlung jener Oberfläche, **dadurch gekennzeichnet, daß** die Zusammensetzung neben Wasser.
a) mindestens einen organischen Filmbildner, der mindestens ein wasserlösliches oder wasserdispergiertes Polymer enthält, das ein Kunstharz ist auf Basis von Polyacrylsäure, Polyacrylat oder/und Polyethylen-Acrylsäure oder ein Kunstharzgemisch oder/und ein Mischpolymerisat ist mit einem Gehalt an Kunstharz auf Basis Acrylat bzw. Polyacryl, wobei der Gesamtgehalt an organischem Filmbildner im Bereich von 0,2 bis 30 g/L liegt,
b) einen Gehalt an Kationen oder/und Hexafluorokomplexen von Kationen ausgewählt aus der Gruppe von Titan, Zirkonium, Hafnium, Silicium und Bor im Bereich von 0,1 bis 50 g/L,
c) mindestens eine anorganische Verbindung in Partikelform mit einem mittleren Partikeldurchmesser gemessen an einem Rasterelektronenmikroskop im Bereich von 0,005 bis zu 0,2 µm Durchmesser, wobei der Gesamtgehalt an diesen anorganischen Verbindungen im Bereich von 0,2 bis 25 g/L liegt,
d) ggf. mindestens ein Silan oder/und Siloxan berechnet als Silan und
e) ggf. mindestens einen Konosionsinhibitor enthält und
wobei das Verhältnis des Gehalts an Kationen oder/und Hexafluorokomplexen von Kationen b) zum Gehalt an anorganischen Verbindungen in Partikelform c) ≤ 5,5 : 1 beträgt.

40. Verwendung der nach dem Verfahren gemäß mindestens einem der vorstehenden Ansprüche 1 bis 38 beschichteten Substrate wie z.B. Draht, Band oder einem Teil, **dadurch gekennzeichnet, daß** das zu beschichtende Substrat ein Draht, eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür- oder Fahrradrahmen oder ein Kleinteil wie z.B. eine Schraube, Mutter, Flansch, Feder oder ein Brillengestell ist.

## Claims

1. A process for coating a metallic surface with an aqueous composition that is largely or entirely free from chromium(VI) compounds as a pretreatment prior to an additional coating or as a treatment, the article to be coated - in particular a strip or section of strip - being optionally formed after being coated, **characterised in that** the composition contains in addition to water
a) at least one organic film former containing at least one polymer that is soluble in water or dispersed in water and that is a synthetic resin based upon polyacrylic acid, polyacrylate or/and polyethylene acrylic acid or a synthetic resin blend or/and a mixed polymer with a content of synthetic resin based upon acrylate or polyacrylic, the total content of organic film former being in the range from 0.2 to 30 g/l,
b) a content of cations or/and hexafluoro complexes of cations selected from the group comprising titanium, zirconium, hafnium, silicon and boron in the range from 0.1 to 50 g/l,
c) at least one inorganic compound in particle form with an average particle diameter measured with a scanning electron microscope ranging from 0.005 to 0.2 µm in diameter, the total content of these inorganic compounds being in the range from 0.2 to 25 g/l,
d) optionally at least one silane or/and siloxane calculated as silane and
e) optionally at least one corrosion inhibitor,
wherein the ratio of the content of cations or/and hexafluoro complexes of cations b) to the content of inorganic compounds in particle form c) in the aqueous composition is ≤ 5.5 : 1,
wherein the clean metallic surface is brought into contact with the aqueous composition and a particle-containing film is formed on the metallic surface, which is then dried and optionally additionally cured and
wherein the dried and optionally also cured film displays a film thickness in the range from 0.01 to 0.5 µm.

2. A process according to claim 1, **characterised in that** a metallic surface consisting of aluminium, iron, copper, magnesium, nickel, titanium, tin, zinc or alloys containing aluminium, iron, copper, magnesium, nickel, titanium, tin or/and zinc, in particular steel or galvanised steel surfaces, is coated.

3. A process according to claim 1 or 2, **characterised in that** the organic film former is present in the form of a solution, dispersion, emulsion, microemulsion or/and suspension.

4. A process according to one of the preceding claims, **characterised in that** the organic film former is at least one synthetic resin, in particular a synthetic resin based upon acrylate, ethylene, polyester, polyurethane, silicone polyester, epoxy, phenol, styrene, urea-formaldehyde, derivatives, copolymers, polymers, mixtures or/and mixed polymers thereof.

5. A process according to one of the preceding claims, **characterised in that** the organic film former is a synthetic resin blend or/and mixed polymer containing an amount of synthetic resin based upon acrylate, polyacrylic, ethylene, polyethylene, urea-formaldehyde, polyester, polyurethane, polystyrene or/and styrene, from which during or after the release of water and other volatile components an organic film is formed.

6. A process according to one of the preceding claims, **characterised in that** the organic film former contains synthetic resins or/and polymers or derivatives, copolymers, polymers, mixtures or/and mixed polymers based upon acrylate, polyacrylic, polethyleneimine, polyurethane, polyvinyl alcohol, polyvinyl phenol, polyvinyl pyrrolidone or/and polyaspartic acid, in particular copolymers with a phosphorus-containing vinyl compound.

7. A process according to one of the preceding claims, **characterised in that** the acid value of the synthetic resins ranges from 5 to 250.

8. A process according to one of the preceding claims, **characterised in that** the molecular weights of the synthetic resins, copolymers, polymers or derivatives, mixtures or/and mixed polymers thereof are in the range of at least 1000 u, preferably at least 5000 u, particularly preferably from 20,000 to 200,000 u.

9. A process according to one of the preceding claims, **characterised in that** the pH of the organic film former in an aqueous preparation without addition of other compounds is in the range from 1 to 12.

10. A process according to one of the preceding claims, **characterised in that** the organic film former contains only water-soluble synthetic resins or/and polymers, in particular those that are stable in solutions with pH values ≤ 5.

11. A process according to one of the preceding claims, **characterised in that** the organic film former contains synthetic resin or/and polymer that display carboxyl groups.

12. A process according to one of the preceding claims, **characterised in that** the acid groups in the synthetic resins are stabilised with ammonia, with amines such as e.g. morpholine, dimethyl ethanolamine, diethyl ethanolamine or triethanolamine or/and with alkali-metal compounds such as e.g. sodium hydroxide.

13. A process according to one of the preceding claims, **characterised in that** the aqueous composition contains 0.5 to 10 g/l of the organic film former.

14. A process according to one of the preceding claims, **characterised in that** the aqueous composition contains 0.2 to 30 g/l of cations or/and hexafluoro complexes of cations selected from the group comprising titanium, zirconium, hafnium, silicon, aluminium and boron.

15. A process according to one of the preceding claims, **characterised in that** Mn ions in an amount ranging from 0.05 to 10 g/l are added to the aqueous composition.

16. A process according to one of the preceding claims, **characterised in that** the content of at least one silane or/and siloxane calculated as silane in the aqueous composition is preferably 0.1 to 50 g/l.

17. A process according to one of the preceding claims, **characterised in that** the aqueous composition contains at least one partially hydrolysed or entirely hydrolysed silane.

18. A process according to one of the preceding claims, **characterised in that** at least one amino silane, an epoxy silane, a vinyl silane or/and at least one corresponding siloxane is included.

19. A process according to one of the preceding claims, **characterised in that** a finely dispersed powder, a dispersion or a suspension such as e.g. a carbonate, oxide, silicate or sulfate is added as the inorganic compound in particle form, in particular colloidal or amorphous particles.

20. A process according to one of the preceding claims, **characterised in that** particles having an average particle size ranging from 8 nm to 150 nm are used as the inorganic compound in particle form.

21. A process according to one of the preceding claims, **characterised in that** particles based upon at least one compound of aluminium, barium, cerium or/and other rare-earth elements, calcium, lanthanum, silicon, titanium, yttrium, zinc or/and zirconium are added as the inorganic compound in particle form.

22. A process according to one of the preceding claims, **characterised in that** particles based upon aluminium oxide, barium sulfate, cerium dioxide, rare-earth mixed oxide, silicon dioxide, silicate, titanium oxide, yttrium oxide, zinc oxide or/and zirconium oxide are added as the inorganic compound in particle form.

23. A process according to one of the preceding claims, **characterised in that** the aqueous composition contains 0.5 to 10 g/l of the at least one inorganic compound in particle form.

24. A process according to one of the preceding claims, **characterised in that** at least one water-miscible or/and water-soluble alcohol, a glycol ether or N-methyl pyrrolidone or/and water is used as the organic solvent for the organic polymers and, if a solvent blend is used, in particular a mixture of water and at least one long-chain alcohol, such as e.g. propylene glycol, an ester alcohol, a glycol ether or/and butanediol, preferably however only water with no organic solvent.

25. A process according to one of the preceding claims, **characterised in that** the content of organic solvent is 0.1 to 10 wt.%.

26. A process according to one of the preceding claims, **characterised in that** an organic compound or an ammonium compound, in particular an amine or an amino compound, is added as corrosion inhibitor.

27. A process according to one of the preceding claims, **characterised in that** at least one wax selected from the group comprising paraffins, polyethylenes and polypropylenes is used as lubricant, in particular an oxidised wax.

28. A process according to claim 27, **characterised in that** the melting point of the wax used as lubricant is in the range from 40 to 160 °C.

29. A process according to one of the preceding claims, **characterised in that** the aqueous composition optionally contains at least one each of a biocide, a defoaming agent or/and a wetting agent.

30. A process according to one of the preceding claims, **characterised in that** an aqueous composition with a pH in the range from 0.5 to 12 is used.

31. A process according to one of the preceding claims, **characterised in that** the aqueous composition is applied to the metallic surface at a temperature in the range from 5 to 50 °C.

32. A process according to one of the preceding claims, **characterised in that** the metallic surface is kept at temperatures in the range from 5 to 120 °C during application of the coating.

33. A process according to one of the preceding claims, **characterised in that** the coated metallic surface is dried at a temperature in the range from 20 to 400 °C PMT (peak metal temperature).

34. A process according to one of the preceding claims, **characterised in that** the coated strips are wound into a coil, optionally after cooling to a temperature in the range from 40 to 70 °C.

35. A process according to one of the preceding claims, **characterised in that** a standard coil-coating lacquer F2-647 together with the topcoat lacquer F5-618 applied to the dried or cured film results in an adhesive strength of a maximum of 10 % of the surface peeled away in a T-bend test with a 1-T bend according to NCCA.

36. A process according to one of the preceding claims, **characterised in that** the aqueous composition is applied by rolling, flow-coating, knife application, spraying, atomisation, brushing or immersion and optionally by subsequent squeezing with a roller.

37. A process according to one of the preceding claims, **characterised in that** at least one coating consisting of lacquer, polymers, paint, adhesive or/and adhesive support is applied to the partially or wholly cured film.

38. A process according to one of the preceding claims, **characterised in that** the coated metal parts, strips or sections of strip are formed, lacquered, coated with polymers such as e.g. PVC, printed, glued, hot-soldered, welded or/and joined to one another or to other elements by clinching or by other joining methods.

39. Aqueous composition for the pretreatment of a metallic surface prior to an additional coating or for the treatment of that surface, **characterised in that** the composition contains in addition to water
a) at least one organic film former containing at least one polymer that is soluble in water or dispersed in water and that is a synthetic resin based upon polyacrylic acid, polyacrylate or/and polyethylene acrylic acid or a synthetic resin blend or/and a mixed polymer with a content of synthetic resin based upon acrylate or polyacrylic, the total content of organic film former being in the range from 0.2 to 30 g/l,
b) a content of cations or/and hexafluoro complexes of cations selected from the group comprising titanium, zirconium, hafnium, silicon and boron in the range from 0.1 to 50 g/l,
c) at least one inorganic compound in particle form with an average particle diameter measured with a scanning electron microscope ranging from 0.005 to 0.2 µm in diameter, the total content of these inorganic compounds being in the range from 0.2 to 25 g/l,
d) optionally at least one silane or/and siloxane calculated as silane and
e) optionally at least one corrosion inhibitor and
wherein the ratio of the content of cations or/and hexafluoro complexes of cations b) to the content of inorganic compounds in particle form c) is ≤ 5.5 : 1.

40. Use of the substrates such as e.g. wire, strip or a part, coated by the process according to at least one of the preceding claims 1 to 38, **characterised in that** the substrate to be coated is a wire, a wire winding, a wire mesh, a steel strip, a metal sheet, a panel, a screen, a vehicle body or part of a vehicle body, a part of a vehicle, trailer, motor caravan or airborne vehicle, a cover, a housing, a lamp, a light, a traffic signal element, a piece of furniture or furniture element, an element of a household appliance, a frame, a profile, a moulding with a complex geometry, a crash barrier, heater or fencing element, a bumper, a part comprising or with at least one pipe or/and profile, a window, door or bicycle frame, or a small part such as e.g. a screw, nut, flange, spring or spectacle frame.

## Revendications

1. Procédé pour le revêtement d'une surface métallique avec une composition aqueuse pratiquement ou totalement exempte de composés contenant du chrome-(IV), pour le prétraitement avant un autre revêtement ou pour le traitement dans lequel le corps à revêtir - en particulier un ruban ou une segment de ruban - est éventuellement mis en forme après le revêtement, **caractérisé en ce que** la composition, outre de l'eau,
a) contient au moins un agent filmogène organique contenant au moins un polymère soluble dans l'eau ou dispersé dans l'eau, qui est une résine synthétique à base de poly(acide acrylique), polyacrylate et/ou poly(éthylène/acide acrylique) ou un mélange de résines synthétiques et/ou un polymère mixte ayant une teneur en résine synthétique à base d'acrylate ou de polyacryle, la teneur totale en agent filmogène organique se situant dans la plage allant de 0,2 à 30 g/l,
b) a une teneur en cations et/ou hexafluorocomplexes de cations choisis dans le groupe constitué par le titane, le zirconium, l'hafnium, le silicium et le bore, dans la plage allant de 0,1 à 50 g/l,
c) contient au moins un composé inorganique sous forme particulaire ayant un diamètre moyen de particule, mesuré sous un microscope électronique à balayage, dans la plage de 0,005 à 0,2 µm de diamètre, la teneur totale en ces composés inorganiques se situant dans la plage allant de 0,2 à 25 g/l,
d) éventuellement au moins un silane et/ou un siloxane calculé en tant que silane et
e) éventuellement au moins un inhibiteur de corrosion,
le rapport de la teneur en cations et/ou hexafluorocomplexes de cations b) à la teneur en composés inorganiques sous forme particulaire c) dans la composition aqueuse étant ≤ 5,5,5:1
la surface métallique propre étant mise en contact avec la composition aqueuse et sur la surface métallique étant formé un film contenant des particules, qui est ensuite séché et éventuellement additionnellement durci et
le film séché et éventuellement également durci ayant une épaisseur de couche dans la plage allant de 0,01 à 0,5 µm.

2. Procédé selon la revendication 1, **caractérisé en ce qu'**on revêt une surface métallique d'aluminium, de fer, cuivre, magnésium, nickel, titane, étain, zinc ou d'alliages contenant de l'aluminium, du fer, du cuivre, du magnésium, du nickel, du titane, de l'étain et/ou du zinc, en particulier des surfaces d'acier ou d'acier galvanisé.

3. Procédé selon la revendication 1 ou 2, **caractérisé en ce que** l'agent filmogène organique se présente sous la forme d'une solution, dispersion, émulsion, microémulsion, et/ou suspension.

4. Procédé selon l'une quelconque des revendications précédentes, **caractérisé en ce que** l'agent filmogène organique est au moins une résine synthétique, en particulier une résine synthétique à base d'acrylate, d'éthylène, de polyester, de polyuréthanne, de silicone-polyester, d'époxyde, de phénol, de styrène, d'urée-formaldéhyde, de leurs dérivés, copolymères, polymères, mélanges et/ou polymères mixtes.

5. Procédé selon l'une quelconque des revendications précédentes, **caractérisé en ce que** l'agent filmogène organique est un mélange de résines synthétiques et/ou un polymère mixte, qui présente une teneur en résine synthétique à base d'acrylate, de polyacryle, d'éthylène, de polyéthylène, d'urée-formaldéhyde, de polyester, de polyuréthanne, de polystyrène et/ou de styrène, à partir duquel un film organique est formé après l'addition d'eau et d'autres composants volatils.

6. Procédé selon l'une quelconque des revendications précédentes, **caractérisé en ce que** l'agent filmogène organique contient des résines synthétiques et/ou des polymères ou dérivés, des copolymères, des polymères, des mélanges et/ou des polymères mixtes à base d'acrylate, de polyacryle, de polyéthylèneimine, de polyuréthanne, de poly(alcool vinylique), de polyvinylphénol, de polyvinylpyrrolidone et/ou de poly(acide aspartique), en particulier des copolymères avec un composé vinylique contenant du phosphore.

7. Procédé selon l'une quelconque des revendications précédentes, **caractérisé en ce que** l'indice d'acide des résines synthétiques se situe dans la plage allant de 5 à 250.

8. Procédé selon l'une quelconque des revendications précédentes, **caractérisé en ce que** les masses moléculaires des résines synthétiques, copolymères, polymères ou de leurs dérivés, mélanges et/ou polymères mixtes sont dans la plage allant d'au moins 1 000, de préférence d'au moins 5 000, façon particulièrement préférée de 20 000 à 200 000.

9. Procédé selon l'une quelconque des revendications précédentes, **caractérisé en ce que** le pH de l'agent filmogène organique, dans une préparation aqueuse sans addition d'autres composés, se situe dans l'intervalle allant de 1 à 12.

10. Procédé selon l'une quelconque des revendications précédentes, **caractérisé en ce que** l'agent filmogène organique ne contient que des résines synthétiques et/ou des polymères hydrosolubles, en particulier ceux qui sont stables dans des solutions à pH ≤ 5.

11. Procédé selon l'une quelconque des revendications précédentes, **caractérisé en ce que** l'agent filmogène organique contient une résine synthétique et/ou un polymère qui comportent des groupes carboxy.

12. Procédé selon l'une quelconque des revendications précédentes, **caractérisé en ce que** les groupes acides des résines synthétiques sont stabilisés avec de l'ammoniac, avec des amines, comme par exemple la morpholine, la diméthyléthanolamine, la diéthyléthanolamine ou la triéthanolamine et/ou avec des composés à base de métaux alcalins, comme par exemple l'hydroxyde de sodium.

13. Procédé selon l'une quelconque des revendications précédentes, **caractérisé en ce que** la composition aqueuse contient de 0,6 à 10 g/l de l'agent filmogène organique.

14. Procédé selon l'une quelconque des revendications précédentes, **caractérisé en ce que** la composition aqueuse contient de 0,2 à 30 g/l de cations et/ou d'hexafluorocomplexes de cations choisis dans le groupe constitué par le titane, le zirconium, l'hafnium, le silicium, l'aluminium et le bore.

15. Procédé selon l'une quelconque des revendications précédentes, **caractérisé en ce qu'**on ajoute à la composition aqueuse des ions Mn à une concentration dans la plage allant de 0,05 à 10 g/l.

16. Procédé selon l'une quelconque des revendications précédentes, **caractérisé en ce que** la teneur de la composition aqueuse en au moins un silane et/ou siloxane calculé en tant que silane vaut de préférence de 0,1 à 50 g/l.

17. Procédé selon l'une quelconque des revendications précédentes, **caractérisé en ce que** la composition aqueuse contient au moins un silane partiellement hydrolysé ou totalement hydrolysé.

18. Procédé selon l'une quelconque des revendications précédentes, **caractérisé en ce qu'**au moins un aminosilane, un époxysilane, un vinylsilane et/ou au moins un siloxane correspondant est contenu.

19. Procédé selon l'une quelconque des revendications précédentes, **caractérisé en ce qu'**en tant que composé inorganique sous forme particulaire on ajoute une poudre finement divisée, une dispersion ou une suspension comme par exemple un carbonate, un oxyde, un silicate ou un sulfate, en particulier des particules colloïdales ou amorphes.

20. Procédé selon l'une quelconque des revendications précédentes, **caractérisé en ce qu'**en tant que composé inorganique sous forme particulaire on utilise des particules ayant une taille moyenne de particule dans la plage allant de 8 nm à 150 nm.

21. Procédé selon l'une quelconque des revendications précédentes, **caractérisé en ce qu'**on ajoute en tant que composé inorganique sous forme particulaire des particules à base d'au moins un composé de l'aluminium, du baryum, du cérium et/ou d'autres terres rares, du calcium, du lanthane, du silicium, du titane, de l'yttrium, du zinc et/ou du zirconium.

22. Procédé selon l'une quelconque des revendications précédentes, **caractérisé en ce qu'**on ajoute en tant que composé inorganique sous forme particulaire des particules à base d'oxyde d'aluminium, de sulfate de baryum, de dioxyde de cérium, d'oxyde mixte de terres rares, de dioxyde de silicium, de silicate, d'oxyde de titane, d'oxyde d'yttrium, d'oxyde de zinc et/ou d'oxyde de zirconium.

23. Procédé selon l'une quelconque des revendications précédentes, **caractérisé en ce que** la composition aqueuse contient de 0,5 à 10 g/l dudit au moins un composé inorganique sous forme particulaire.

24. Procédé selon l'une quelconque des revendications précédentes, **caractérisé en ce qu'**en tant que solvant organique pour les polymères organiques on utilise au moins un alcool soluble dans l'eau et/ou miscible à l'eau, un éther de glycol ou la N-méthylpyrrolidone et/ou l'eau, dans le cas de l'utilisation d'un mélange de solvants en particulier un mélange d'eau et d'au moins un alcool à longue chaîne, comme par exemple le propylèneglycol, un ester-alcool, un éther de glycol et/ou le butanediol, mais de préférence seulement l'eau sans solvant organique.

25. Procédé selon l'une quelconque des revendications précédentes, **caractérisé en ce que** la teneur en solvant organique vaut de 0,1 à 10 % en poids.

26. Procédé selon l'une quelconque des revendications précédentes, **caractérisé en ce qu'**on ajoute en tant qu'inhibiteur de corrosion un composé organique ou un composé à base d'ammonium, en particulier une amine ou un composé amino.

27. Procédé selon l'une quelconque des revendications précédentes, **caractérisé en ce qu'**on utilise en tant que lubrifiant au moins une cire choisie dans le groupe des paraffines, polyéthylènes et polypropylènes, en particulier une cire oxydée.

28. Procédé selon la revendication 27, **caractérisé en ce que** le point de fusion de la cire utilisée en tant que lubrifiant se situe dans la plage allant de 40 à 160°C.

29. Procédé selon l'une quelconque des revendications précédentes, **caractérisé en ce que** la composition aqueuse contient éventuellement, respectivement, au moins un biocide, un antimousse et/ou un agent mouillant.

30. Procédé selon l'une quelconque des revendications précédentes, **caractérisé en ce qu'**on utilise une composition aqueuse à un pH dans l'intervalle de 0,5 à 12.

31. Procédé selon l'une quelconque des revendications précédentes, **caractérisé en ce que** la composition aqueuse est appliquée sur la surface métallique à une température dans la plage de 5 à 50°C.

32. Procédé selon l'une quelconque des revendications précédentes, **caractérisé en ce que** lors de l'application du revêtement la surface métallique est maintenue à une température dans la plage de 5 à 120°C.

33. Procédé selon l'une quelconque des revendications précédentes, **caractérisé en ce que** la surface métallique revêtue est séchée à une température dans la plage de 20 à 400°C PMT (*peak-metal-temperature*).

34. Procédé selon l'une quelconque des revendications précédentes, **caractérisé en ce que** les rubans revêtus sont enroulés en un ruban continu (*coil*), éventuellement après un refroidissement jusqu'à une température dans la plage de 40 à 70°C.

35. Procédé selon l'une quelconque des revendications précédentes, **caractérisé en ce que** qu'une peinture standard pour rubans continus *Standard-Coil-Coating-Lack* F2-647 conjointement avec la peinture de finition *Top Coat-Lack* F5-818, appliquées sur le film séché ou durci, donne une adhésivité entre couches d'au maximum 10 % de la surface décollée dans un essai de flexion en T avec une flexion T1 selon NCCA.

36. Procédé selon l'une quelconque des revendications précédentes, **caractérisé en ce que** la composition aqueuse est appliquée par enduction au rouleau, enduction par ruissellement, enduction à la racle, pistolage, pulvérisation, enduction au pinceau ou trempage et éventuellement par expression subséquente avec un rouleau.

37. Procédé selon l'une quelconque des revendications précédentes, **caractérisé en ce qu'**on applique sur le film partiellement ou totalement durci au moins un revêtement de laque, polymères, peinture, adhésif et/ou support d'adhésif.

38. Procédé selon l'une quelconque des revendications précédentes, **caractérisé en ce que** les pièces métalliques revêtues, rubans ou segments de rubans revêtus sont mis en forme, peints, revêtus de polymères comme par exemple le PVC, imprimés, collés, brasés à chaud, soudés et/ou assemblés entre eux ou avec d'autres éléments par rivetage ou d'autres techniques d'assemblage.

39. Composition aqueuse pour le prétraitement d'une surface métallique avant un autre revêtement ou pour le traitement de la surface, **caractérisée en ce que** la composition, outre de l'eau,
a) contient au moins un agent filmogène organique contenant au moins un polymère soluble dans l'eau ou dispersé dans l'eau, qui est une résine synthétique à base de poly(acide acrylique), polyacrylate et/ou poly(éthylène/acide acrylique) ou un mélange de résines synthétiques et/ou un polymère mixte ayant une teneur en résine synthétique à base d'acrylate ou polyacryle, la teneur totale en agent filmogène organique se situant dans la plage allant de 0,2 à 30 g/l,
b) a une teneur en cations et/ou hexafluorocomplexes de cations choisis dans le groupe constitué par le titane, le zirconium, l'hafnium, le silicium et le bore, dans la plage allant de 0,1 à 50 g/l,
c) contient au moins un composé inorganique sous forme particulaire ayant un diamètre moyen de particule, mesuré sous un microscope électronique à balayage, dans la plage de 0,005 à 0,2 µm de diamètre, la teneur totale en ces composés inorganiques se situant dans la plage allant de 0,2 à 25 g/l,
d) éventuellement au moins un silane et/ou un siloxane calculé en tant que silane et
e) éventuellement au moins un inhibiteur de corrosion,
le rapport de la teneur en cations et/ou hexafluorocomplexes de cations b) à la teneur en composés inorganiques sous forme particulaire c) étant ≤ 5,5:1.

40. Utilisation des subjectiles revêtus selon le procédé conformément à au moins l'une des revendications précédentes 1 à 38, comme par exemple un fil, un ruban ou une pièce, **caractérisée en ce que** le subjectile à revêtir est un fil, un enroulement de fil, un treillis de fils, un ruban d'acier, une tôle, un chemisage, un blindage, une carrosserie ou une partie d'une carrosserie, une partie d'un véhicule, d'une remorque, d'une caravane ou d'un engin volant, une couverture, un boîtier, une lampe, un luminaire, un élément de signalisation, une pièce de meuble ou un élément de meuble, un élément d'un appareil ménager, une étagère, un profilé, une pièce moulée de géométrie compliquée, un élément de rail de sécurité, de corps de chauffe ou de clôture, un pare-chocs, une pièce consistant en ou comportant au moins un tube et/ou un profilé, un châssis de fenêtre, de porte ou de bicyclette, ou une petite pièce de montage, comme par exemple une vis, un écrou, un collet, un ressort ou une monture de lunettes.
